# Europäisches Patentamt

## European Patent Office

## Office européen des brevets

(19)

(11) Veröffentlichungsnummer: **0 013 573**
**B1**

(12) **EUROPÄISCHE PATENTSCHRIFT**

(45) Veröffentlichungstag der Patentschrift:
**28.07.82**

(51) Int. Cl.³: **B 23 Q 15/007,** H 03 K 13/00 //
**B23K15/00**

(21) Anmeldenummer: **80100128.0**

(22) Anmeldetag: **11.01.80**

(54) **Verfahren und Einrichtung zur Positionsregelung eines Ladungsträgerstrahls in einer Ladungsträgerstrahl-Werkzeugmaschine.**

(30) Priorität: **12.01.79 DE 2901148**
**13.09.79 DE 2937094**

(43) Veröffentlichungstag der Anmeldung:
**23.07.80 Patentblatt 80/15**

(45) Bekanntmachung des Hinweises auf die Patenterteilung:
**28.07.82 Patentblatt 82/30**

(84) Benannte Vertragsstaaten:
**BE DE FR GB IT SE**

(56) Entgegenhaltungen:
**CH-A-476 995**
**DE-A-2 122 412**
**DE-A-2 821 028**
**DE-B-1 615 507**
**US-A-3 775 581**

(73) Patentinhaber: **MESSER GRIESHEIM GMBH,**
**Patentabteilung Hanauer Landstrasse 330,**
**D-6000 Frankfurt/Main 1 (DE)**

(72) Erfinder: **Mönch, Clauspeter, Dipl.-Phys.,**
**Hauptstrasse 57, D-8082 Grafrath (DE)**
Erfinder: **Anderl, Peter, Ing.-Grad., Fodermayrstrasse 20,**
**D-8000 München 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren und Einrichtung zur Positionsregelung eines Ladungsträgerstrahls in einer Ladungsträgerstrahl-Werkzeugmaschine

Die vorliegende Erfindung betrifft ein Verfahren und eine Einrichtung zur Positionsregelung eines Ladungsträgerstrahles, insbesondere Elektronenstrahles, in einer Ladungsträgerstrahl-Werkzeugmaschine.

Ein bevorzugtes Anwendungsgebiet des Verfahrens gemäss der Erfindung ist die Positionsregelung beim Ladungsträgerstrahl-, insbesondere Elektronenstrahlschweissen. Das Verfahren gemäss der Erfindung lässt sich jedoch auch bei anderen Ladungsträgerstrahlbearbeitungsverfahren mit Vorteil verwenden, z.B. beim Elektronenstrahl-Fräsen, -Schneiden, -Gravieren. Elektronenstrahl-Schweissmaschinen sind z.B. aus der US-A-2 793 281 bekannt.

Bei der Bearbeitung eines Werkstückes mittels eines Ladungsträgerstrahles ist es oft erforderlich, den Fleck, wo der Strahl auf die Werkstückoberfläche auftrifft, auf einer Maschinenachse (Achse des Strahlerzeugungssystems) zu halten oder allgemeiner die Position des Strahlauftreff-Fleckes bezüglich einer Referenzposition zu regeln, die eine feste Lagebeziehung zum Strahlerzeugungssystem hat. So ist es z.B. beim Elektronenstrahlschweissen mit Zusatzmaterial, das gewöhnlich in Form eines Drahtes, Stabes oder Bandes in den Schweissbereich eingeführt wird, wichtig, einen vorgegebenen, konstanten Abstand zwischen dem Strahlauftreff-Fleck und dem Punkt, bei dem das Zusatzmaterial in den Schweissbereich eintritt, aufrechtzuerhalten, damit die Strömungsverhältnisse innerhalb des Schmelzbades im Schweissbereich durch das Zusatzmaterial nicht ungünstig beeinflusst werden. Ähnliche Verhältnisse liegen vor, wenn der in Bearbeitungsrichtung (Vorschubrichtung, x-Richtung) gemessene Abstand des Strahles zu einer anderen Zusatzvorrichtung konstant gehalten werden soll, z.B. einer mit dem Strahl bewegten Schweissbadunterstützungsvorrichtung, die das Ausfliessen der Schmelze aus dem Schweissbereich verhindern soll. Ferner ist eine feste Relation zwischen der Position des Strahlerzeugungssystems und der des Werkstückes erforderlich, wenn der betreffende Elektronenstrahl-Bearbeitungsvorgang bei vorprogrammierter Relativbewegung zwischen Strahlerzeugungssystem und Werkstück mit hoher Präzision durchgeführt werden soll.

Das draht- oder bandförmige Zusatzmaterial (im folgenden kurz «Zusatzdraht») wird gewöhnlich schräg, d.h. mit einem von null verschiedenen Winkel bezüglich der mittleren Achse des Elektronenstrahls in den Schweissbereich eingeführt. Der in Schweissrichtung (x-Richtung) gerechnete Abstand zwischen der Auftreffstelle des Elektronenstrahls und der Position des Zusatzdrahtes in der Ebene der Werkstückoberfläche kann sich durch Magnetfelder mit einer senkrecht zur Strahlrichtung (z-Richtung) und zur Schweissrichtung gerichteten Komponente (Komponente in y-Richtung) und/oder durch Änderungen des Arbeitsabstandes in Strahlrichtung (z-Richtung), d.h. Änderungen des Abstandes zwischen dem Strahlerzeugungssystem und der Werkstückoberfläche, ändern.

Es ist bei einem Verfahren zur Regelung der Strahlauftrefffleckposition aus der DE-A-28 21 028 bekannt, die Position des Elektronenstrahls in x- oder Schweissrichtung in der Nähe der Werkstückoberfläche bezüglich des Strahlerzeugungssystems durch eine nadelförmige Sondenelektrode zu messen, die parallel zur Werkstückoberfläche und in nahem Abstand von dieser rotiert und dabei periodisch durch den Strahl läuft. Die Lage des in der Nähe des Schweissbereichs befindlichen Teiles der Werkstückoberfläche in z-Richtung wurde durch beidseits der Schweissnaht angeordnete mechanische Tastsensoren gemessen. Eine Messung mit bewegten mechanischen Tastsensoren bzw. Sondenelektroden ist jedoch nicht unproblematisch, da in der Nähe des Schweissbereiches einer mit höherer Leistung arbeitenden Elektronenstrahl-Schweissmaschine hohe Temperaturen herrschen und Verunreinigungen durch verspritzen des Materials auftreten können. Dies kann sowohl die Messgenauigkeit als auch die Betriebssicherheit ungünstig beeinflussen.

Aus der DE-A-28 21 028, insbesondere den Figuren 11 bis 13, ist es ferner bekannt, einen in Schweissrichtung vor dem augenblicklichen Schweissbereich liegenden Teil der Werkstückoberfläche mit dem Elektronenstrahl abzutasten, um die Position einer zu verschweissenden Fuge und/oder deren Breite zu messen. Der Elektronenstrahl wird dabei längs eines Weges abgelenkt, der im wesentlichen die Form eines gleichseitigen Dreiecks hat, dessen durch die beiden gleichen Seiten gebildete Ecke im Schweissbereich liegt und dessen dieser Ecke gegenüberliegende Basisseite im wesentlichen senkrecht zur Schweissrichtung verläuft. Diese Basisseite wird zur Messwerterfassung ausgenutzt.

Aus der DE-B-16 15 507 ist ein Verfahren zur Regelung der Position des Auftreffpunktes eines zum Elektronenstrahlschweissen verwendeten Elektronenstrahls auf einem Werkstück bekannt, bei dem ein in Schweissrichtung vor der augenblicklichen Schweissstelle liegender Teil der Werkstückoberfläche durch den Elektronenstrahl quer zur Schweissrichtung abgetastet wird.

Der vorliegenden Erfindung liegt die Aufgabe zugrunde, ein Verfahren der letztgenannten Art so weiterzuentwickeln, dass es zum Kompensieren von Positionsfehlern des Elektronenstrahles in Vorschub- oder Schweissrichtung und quer zu dieser, jeweils bezogen auf eine feste Maschinenachse (insbesondere die Achse des Strahlerzeugungssystems) verwendet werden kann, die durch Störmagnetfelder und/oder Arbeitsabstandsänderungen verursacht werden.

Diese Aufgabe wird erfindungsgemäss durch das im Patentanspruch 1 gekennzeichnende Verfahren gelöst.

Vorteilhafte Weiterbildungen und Einrichtungen zur Durchführung des erfindungsgemässen Verfahrens sind Gegenstand der Ansprüche 2 bis 10.

Bei dem Verfahren gemäss der Erfindung wird also die Lage mindestens eines Teiles eines vom Strahlauftreff-Fleck auf der Werkstückoberfläche durchlaufenen Messweges bezüglich mindestens einer Messbereichsgrenze bestimmt und dabei mindestens ein Signal erzeugt, das zur Regelung der Strahlposition verwendet wird.

Durch das Verfahren gemäss der Erfindung lassen sich unerwünschte Abweichungen der Position des Elektronenstrahls in Bearbeitungs-Richtung sowie senkrecht zu dieser und zur Strahlrichtung erfassen sowie kompensieren und insbesondere lässt sich auch beim Schweissen mit Zusatzmaterial (Zusatzdraht) der in Schweissrichtung gerechnete Abstand zwischen dem Zusatzdraht und dem Strahl in der Ebene der Werkstückoberfläche auf einem vorgegebenen Wert konstanthalten, so dass auch bei unebener Werkstückoberfläche und dem Vorhandensein von Störmagnetfeldern unterschiedlicher Intensität einwandfreie Schweissnähte erzielt werden können.

Durch eine spezielle Weiterbildung der Erfindung wird zusätzlich die Möglichkeit geschaffen, auch einen Versatz (Höhenunterschied) zweier Werkstückkanten, die eine zu verschweissende Fuge bilden, in z-Richtung messtechnisch zu erfassen und gegebenenfalls Kompensationsmassnahmen zu treffen.

Im folgenden werden Ausführungsbeispiele der Erfindung unter Bezugnahme auf die Zeichnung näher erläutert.

Es zeigen:

Fig. 1 eine schematische perspektivische Ansicht der Oberfläche einer Werkstückanordnung, eines Strahl-Messweges und der Sichtbereiche zweier Messstrahlungssensoren, die bei einer Ausführungsform der Erfindung verwendet werden;

Fig. 2 eine schematische Schnittansicht, die die in Fig. 1 dargestellten Verhältnisse in einer durch die mittlere Strahlachse und die Schweissrichtung definierten x-z-Ebene zeigt;

Fig. 3 eine schematische Darstellung der Verhältnisse in der x-z-Ebene bei Änderungen des Arbeitsabstandes und der Gegenwart von Störmagnetfeldern mit einer Komponente in y-Richtung (die senkrecht zur Zeichenebene verläuft);

Fig. 4 ein Blockschaltbild einer Ausführungsform einer erfindungsgemässen Einrichtung;

Fig. 5 Diagramme des zeitlichen Verlaufes von Signalen, auf die bei der Erläuterung der Arbeitsweise der Einrichtung gemäss Fig. 4 Bezug genommen wird;

Fig. 6 ein Blockschaltbild einer Weiterbildung der Einrichtung gemäss Fig. 4;

Fig. 7 eine graphische Darstellung des zeitlichen Verlaufes von Signalen, auf die bei der Erläuterung der Arbeitsweise der Einrichtung gemäss Fig. 6 Bezug genommen wird;

Fig. 8 eine schematische Darstellung des Zusammenschweissens zweier Bleche mit Hilfe eines Elektronenstrahls;

Fig. 9 eine schematische Darstellung eines bevorzugten Messprinzips, bei dem der Elektronenstrahl während einer Messperiode die Grenzen des Messbereiches eines einzigen Röntgenstrahlungssensors überschreitet;

Fig. 10 eine weitere Darstellung zur Erläuterung dieses Messprinzips;

Fig. 11a und b Skizzen zur Erläuterung der Bestimmung des Zeitpunktes der Überschreitung der Messbereichsgrenzen unter verschiedenen auf den Bearbeitungsstrahl einwirkenden Einflussgrössen;

Fig. 12 eine Darstellung der Häufigkeitsfunktion oder Impulsrate des Sensorausgangssignals zur Veranschaulichung der Verhältnisse beim Eintreten und Verlassen des Messbereichs durch den Strahl während der Messperiode;

Fig. 13a-c Prinzipskizzen zur Erläuterung der Ermittlung verschiedener Messparameter;

Fig. 14 eine schematische Darstellung einer bevorzugten, digital arbeitenden Anordnung gemäss der Erfindung zur Ableitung von Fehlersignalen;

Fig. 15 eine schematische Darstellung eines Ladungsträgerstrahlgerätes gemäss einer weiteren Ausführungsform der Erfindung;

Fig. 16 ein Schaltbild eines Teiles der Einrichtung gemäss Fig. 15;

Fig. 17 eine Darstellung der Werkstückoberfläche im Strahlauftreffbereich der Einrichtung gemäss Fig. 15;

Fig. 18 eine Fig. 17 entsprechende Darstellung für eine etwas andere Situation als sie in Fig. 17 dargestellt ist, und

Fig. 19 eine graphische Darstellung eines Signalverlaufes, wie er bei der Situation gemäss Fig. 18 auftritt.

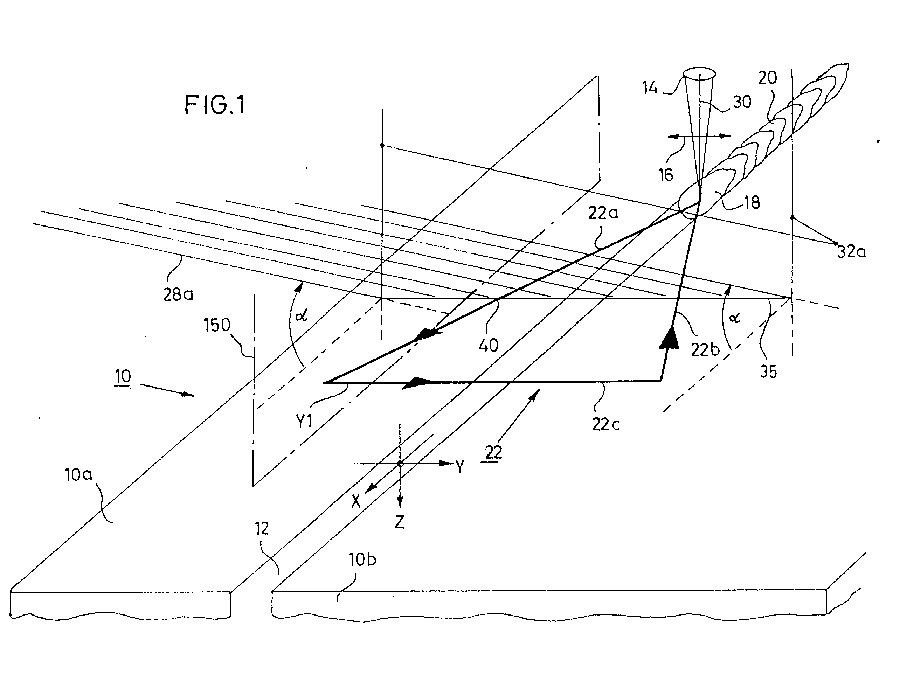

Fig. 1 zeigt eine Werkstückanordnung 10 mit zwei Werkstückteilen 10a und 10b, die zwei einander gegenüberliegende Ränder haben, welche eine zu verschweissende Fuge 12 bilden. Die Fuge 12 wird mittels eines Elektronenstrahls 14 verschweisst, der durch ein nicht dargestelltes Strahlerzeugungssystem einer üblichen Elektronenstrahlschweissmaschine erzeugt wird. Der Elektronenstrahl 14 wird während des Schweissens quer zur Fuge 12 in y-Richtung periodisch abgelenkt («gewedelt»), was in Fig. 1 durch einen Doppelpfeil 16 angedeutet ist. Ferner wird der Elektronenstrahl durch eine mittels eines Supports oder dergleichen bewirkte Relativbewegung zwischen Strahlerzeugungssystem und Werkstückanordnung 10 längs der Fuge 12 bewegt. Die mittlere Strahlachse (also die Achse des Strahles ohne Ablenkung oder Wedelung) ist dabei im allgemeinen auf die Mitte der Fuge 12 gerichtet und bewegt sich in Schweiss- oder x-Richtung entlang der Fuge. Dort wo der (in y-Richtung) gewedelte Strahl auf die Werkstückanordnung trifft, erzeugt er ein Schmelzbad 18, das mit dem Strahl längs der Fuge wandert und beim Erstarren eine Schweissnaht 20 hinterlässt. Die mittlere Strahlachse fällt gewöhnlich mit der Achse des Strahlerzeugungssystems zusammen.

Um eine Messung durchzuführen, wird die die Wedelung 16 bewirkende Strahlablenkung kurzzeitig, z.B. für einige Millisekunden, unterbrochen und der Strahl wird in bekannter Weise längs eines dreieckförmigen Weges 22, der im folgenden als «Messtriangel» bezeichnet werden soll, abgelenkt. Der Messtriangel hat im wesentlichen die Form eines gleichseitigen Dreiecks mit zwei schräg zur x-Richtung verlaufenden, wenigstens annähernd gleichen Seiten 22a und 22b, die sich in einer Ecke etwa in der Mitte des Schweissbades 18 treffen, sowie eine Basisseite 22c, die quer zur Schweissrichtung x und Fuge 12, also im wesentlichen in y-Richtung, verläuft. Bei dem aus der DE-A-28 21 928 bekannten Verfahren wird lediglich die Basisseite 22c zu Messzwecken ausgenutzt, um die Breite der Fuge 12 und/oder die Strahlposition in y-Richtung relativ zum Spalt zu bestimmen. Die Geschwindigkeit, mit der der Strahl die Seiten des Messtriangels durchläuft, ist zweckmässigerweise konstant.

Bei dem Verfahren gemäss der Erfindung wird nun mindestens eine der anderen Seiten 22a, 22b, die im folgenden als «Seitenflanken» des Messtriangels bezeichnet werden sollen, in Verbindung mit zwei Sensoren, vorzugsweise Röntgenstrahlungssensoren, die unterschiedliche Messfeldbegrenzungen haben, zu Messzwecken und zur Erzeugung von Signalen verwendet, mit denen weitere Information über die geometrischen Verhältnisse in der Umgebung des Schweissbereiches gewonnen werden und die Strahlposition geregelt wird.

Bei dem im folgenden beschriebenen Ausführungsbeispiel werden zwei Röntgenstrahlungssensoren 24 und 26 verwendet, welche auf die Röntgenstrahlung ansprechen, die der auf die metallischen Werkstückteile 10a und 10b auftreffende Elektronenstrahl erzeugt. Die Leistung des Elektronenstrahls kann während der Messperiode, in der er den Messtriangel 22 durchläuft, z.B. durch eine entsprechende Erhöhung der negativen Spannung an einer Wehnelt-Elektrode des Strahlerzeugungssystems von der Schweissleistung auf eine geringere Leistung herabgesetzt werden, die beispielsweise in der Grössenordnung von 10 Watt liegen kann.

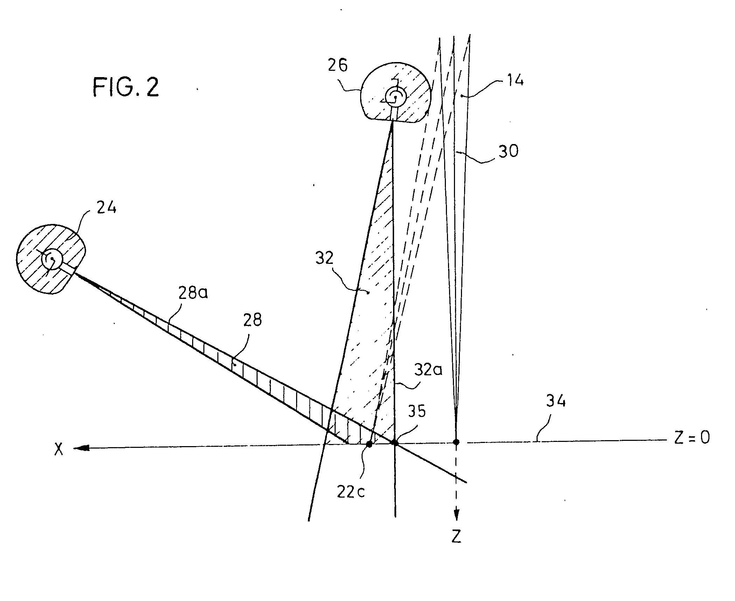

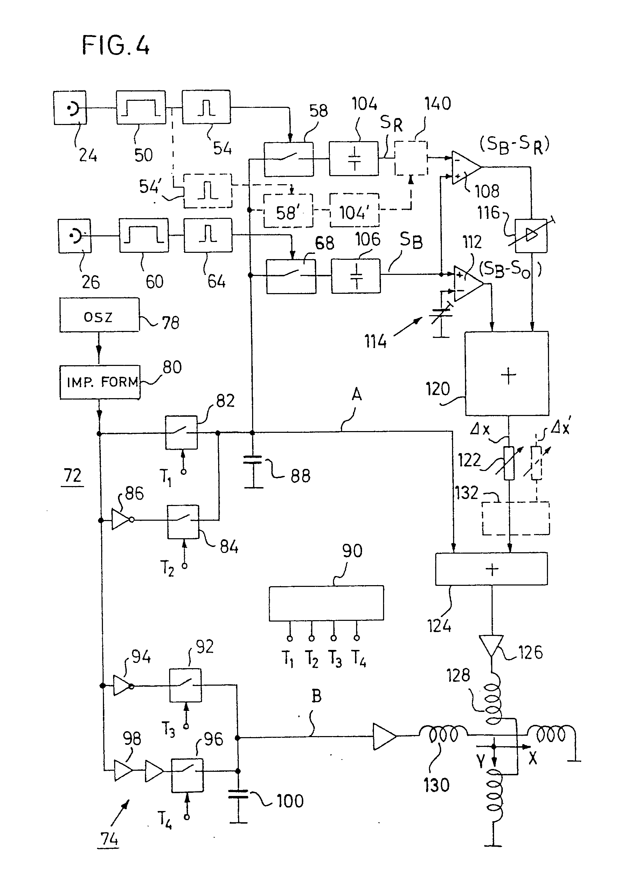

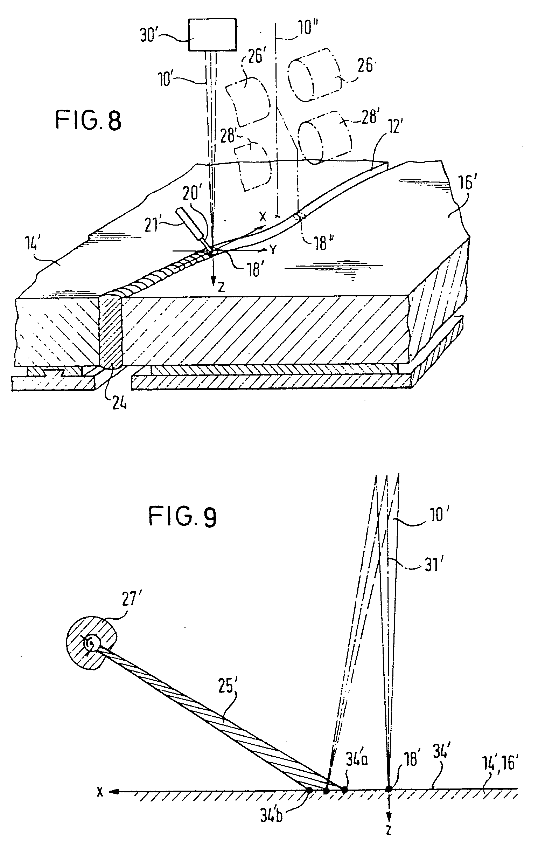

Wie Fig. 2 zeigt, hat der erste Sensor 24 ein Gesichtsfeld 28, das in der xz-Ebene in der dargestellten Weise schräg zur mittleren Strahlrichtung 30 des Elektronenstrahles 14 verläuft und eine parallel zur y-Richtung (die in Fig. 2 senkrecht zur Zeichenebene verläuft) verlaufende obere Grenze 28a hat. Als Sensor 24 kann z.B. der Röntgenstrahlungssensor verwendet werden, der bei dem bekannten Verfahren gemäss der DE-A-28 21 028 zur y-Strahlpositions- und Fugenbreitenmessung dient (Sensor 32 in Fig. 4 und 8 der Offenlegungsschrift). Der zusätzliche zweite Sensor 26 ist so angeordnet, dass sein Gesichtsfeld 32 eine dem Strahl 14 zugewandte «hintere» Grenze 32a hat, die parallel zur mittleren Strahlrichtung 30 (z-Richtung) und y-Richtung verläuft und die «hintere» Gesichtsfeldgrenze 28a des Gesichtsfeldes 28 des ersten Sensors 24 in einer Schnittgeraden 35 schneidet, die in einer Ebene 34 verläuft, die durch den dem Soll-Arbeitsabstand entsprechenden Punkt $z = 0$ geht und senkrecht zur z-Richtung verläuft. Der erste Sensor 24 kann also beispielsweise in der xz-Ebene angeordnet sein und der zweite Sensor 26 in einer Ebene, die in Schweissrichtung gesehen in einem gewissen Abstand, der kleiner als die x-Abmessung des Messtriangels 22 ist, vor der die mittlere Strahlachse 30 enthaltenden yz-Ebene liegt.

Der Messtriangel 22, der vom Strahl 14 in z.B. zwei Millisekunden und mit einer Wiederholungsfrequenz von z.B. wenigen Hertz bis einigen hundert Hertz durchlaufen wird, kann in bekannter Weise erzeugt und bemessen werden. Die zur y-Richtung im wesentlichen parallele Basisseite 22c kann wie bisher zur y-Positionsmessung des Strahles bezüglich der Fuge und/oder zur Fugenbreitenmessung verwendet werden.

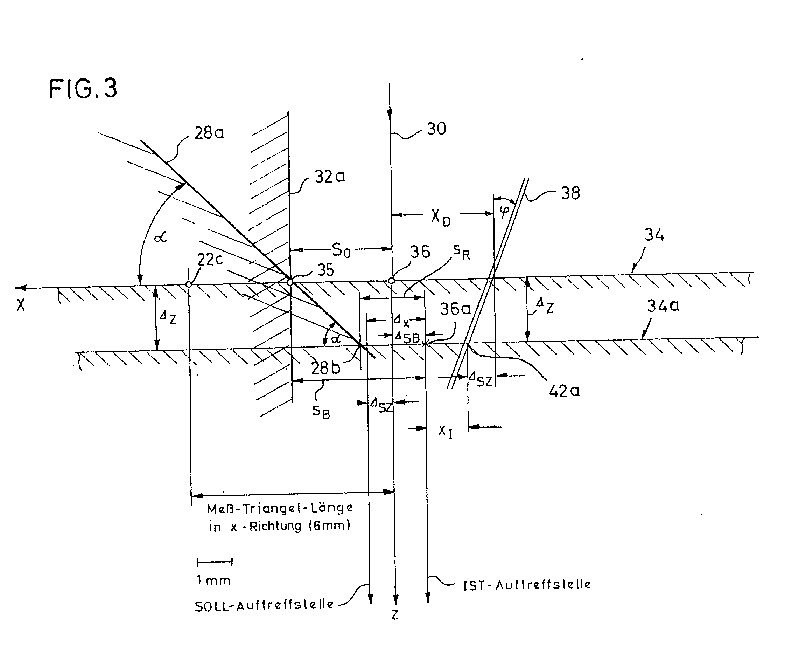

In Fig. 3 sind die geometrischen Verhältnisse in der Nähe der Schweissstelle im Massstab 10:1 vergrössert in einem Schnitt in der xz-Ebene dargestellt. Auf diese Figur wird bei der folgenden Erläuterung des vorliegenden Verfahrens hauptsächlich Bezug genommen.

Mit 34 ist wieder die Ebene dargestellt, die die Schnittlinie 35 der hinteren Gesichtsfeldgrenzen 28a und 32a enthält. Die Ebene 34 stellt gleichzeitig die Soll-Ebene ($z = 0$) für die Werkstückoberfläche dar. Beim Einrichten der Werkstückanordnung in Vorbereitung des Schweissvorganges wird die Werkstückoberfläche am Anfang der Schweissnaht bzw. Fuge 12 im wesentlichen in diese Ebene gebracht. Wenn keine Störmagnetfelder vorhanden sind, schneidet die mittlere Strahlrichtung 30 die Ebene 34 in einem Soll-Auftreffpunkt 36. Beim Schweissen bewegt sich die mittlere Strahlrichtung 30 in x-Richtung. Ein Zusatzdraht 38 wird in der xz-Ebene unter einem Winkel $\phi$ so zugeführt, dass er in einem Soll-Abstand $x_0$ hinter der mittleren Strahlrichtung 30 des unabgelenkten Strahles die Ebene 34 durchsetzt und in das Schweissbad (in Fig. 3 nicht dargestellt) eintritt.

Während jeder Messperiode durchläuft der Strahl den Messtriangel 22, wobei der Strahlauftreffpunkt während des Durchlaufens der Seitenflanken 22a und 22b (Fig. 1) sich sowohl in y-Richtung als auch in x-Richtung bewegt. Infolge der Bewegung in x-Richtung erreicht der Strahlauftreffpunkt schliesslich eine Stelle 40 (Fig. 1) auf der Schnittgeraden 35 und tritt dadurch gleichzeitig in das Gesichtsfeld der beiden Sensoren 24 und 26 (Fig. 2) ein, deren Ausgangssignal dann entsprechend ansteigt.

Es sei nun angenommen, dass sich der Arbeitsabstand durch eine Unebenheit der Werkstückoberfläche um $\Delta z$ vergrössert und gleichzeitig ein Störmagnetfeld auftritt, welches den Strahl um eine Strecke $\Delta_{SB}$ in negativer x-Richtung, also in Richtung auf den Zusatzdraht 38 hin, ablenkt. Die Ebene, in der sich die Werkstückoberfläche nun befindet, ist in Fig. 3 mit 34a bezeichnet und die mittlere Richtung des Elektronenstrahls (also die Richtung des durch das Störmagnetfeld abgelenkten Elektronenstrahls ohne Wedelung) schneidet die Ebene 34a im Punkt 36a. Der Punkt 36a stellt also die Ist-Strahlauftreffstelle dar. Der Abstand zwischen der Stelle, wo der Zusatzdraht 38 die Ebene 34a erreicht, und der Ist-Strahlauftreffstelle 36a ist daher nur noch gleich $x_i$. Die zur Herstellung des Soll-Abstandes $x_D$ zwischen der Stelle 42a, wo der Zusatzdraht 38 die Ebene 34a erreicht, und der Ist-Strahlauftreffstelle 36a ist also eine korrigierende Strahlablenkung des Betrages $\Delta x$ in x-Richtung erforderlich. Die Strahlkorrektur $\Delta x$ setzt sich zusammen aus der durch das Störmagnetfeld verursachten Strahlablenkung $\Delta_{SB}$, die rückgängig zu machen ist, und aus der durch die Änderung des Arbeitsabstandes verursachten Korrektur $\Delta_{SZ} = \Delta z . tg \, \phi$, in die der Zuführungswinkel $\phi$ des Zusatzdrahtes eingeht.

Um den Soll-Abstand $x_D$ zwischen der Strahlauftreffstelle und der Stelle, an der der Zusatzdraht die Ebene der Werkstückoberfläche erreicht, wiederherzustellen, ist also die folgende Verschiebung $\Delta x$ der Strahlauftreffstelle erforderlich:

$$\Delta x = \Delta_{SB} + \Delta_{SZ} = \Delta_{SB} + \Delta_z . tg \, \phi \qquad (1)$$

Aus Fig. 3 ergibt sich ferner die folgende Beziehung:

$$\Delta_z = (S_B - S_R) . tg\alpha \qquad (2)$$

wobei

$S_B$ der in x-Richtung gemessene Abstand zwischen der Sichtbereichsgrenze 32a und dem Ist-Strahlauftreff-Fleck 36a,

$S_R$ der in x-Richtung gerechnete Abstand zwischen der Ist-Strahlauftreffstelle 36a und einer Schnittgeraden 28b zwischen der Ebene 34a und der Sichtbereichsgrenze 28a des Sensors 1 und

$\alpha$ der Winkel zwischen der Ebene 34 bzw. 34a und der (ebenen) Sichtbereichsgrenze 28a ist.

Aus Fig. 3 ist ferner die folgende Beziehung zu entnehmen:

$$\Delta_{SB} = S_B - S_0 \qquad (3)$$

Durch Einsetzen der Gleichungen (2) und (3) in die Gleichung (1) erhält man:

$$\Delta x = (S_B - S_0) + (S_B - S_R) . tg\alpha . tg \, \phi \qquad (4)$$

Die Gleichung (4) enthält die Maschinenkonstanten $S_0$, $tg \, \alpha$ und $tg \, \phi$, sowie die Messgrössen $S_B$ und $S_R$. Die Grösse $S_B$ lässt sich direkt mit dem Sensor 26, die Messgrösse $S_R$ mit dem Sensor 24 messen, sie entsprechen jeweils der x-Komponente der Strahlablenkung während einer Seitenflanke des Messtriangels, also dem in x-Richtung gemessenen Abstand zwischen dem Anfang (Punkt 36a) des dreieckförmigen Ablenkungsweges und dem Punkt, wo der Strahlauftreffpunkt die Gesichtsfeldgrenzen 32a bzw. 28a des zweiten Sensors 32 bzw. die des ersten Sensors 24 überschreitet.

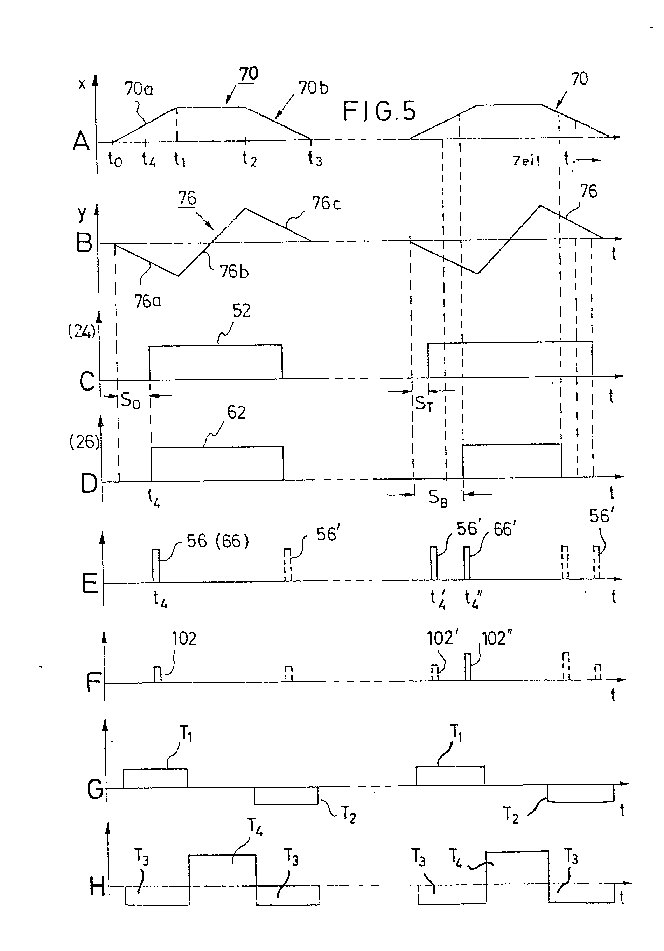

Im folgenden wird unter Bezugnahme auf die Fig. 4 und 5 eine Einrichtung beschrieben, mit der unerwünschte Verlagerungen des Strahlauftreffpunktes in x-Richtung, die in der oben beschriebenen Weise gemessen wurden, kompensiert oder ausgeregelt werden können.

Das Ausgangssignal des Sensors 24 wird einer Impulsformungsschaltung 50 (z.B. einer Schmitt-Trigger-Schaltung) zugeführt, die das Ausgangssignal des Sensors 24 in einen Rechteckimpuls 52 (Fig. 5C) umfort, der steile Vorder- und Rückflanken hat. Die Vorderflanke bzw. Rückflanke des Rechteckimpulses 52 treten auf, wenn der Strahlauftreff-Fleck beim Durchlaufen des Messtriangels die Sichtbereichsgrenze 28a durchläuft und in den Messbereich 28 des Sensors 24 eintritt bzw. aus diesem austritt. An die Impulsformungsschaltung 50 ist eine durch die ansteigende Vorderflanke auslösbare Impulsgeneratorschaltung 54 angeschlossen, die z.B. aus einem monostabilen Multivibrator bestehen kann und beim Auftreten der Vorderflanke jedes Impulses 52 einen Rechteckimpuls 56 (Fig. 5E) liefert, der einem Eingang einer UND-Schaltung 58 zugeführt wird.

In entsprechender Weise ist der Ausgang des zweiten Sensors 26 mit einer Impulsformungsschaltung 60 verbunden, die rechteckförmige Ausgangsimpulse 62 mit steiler Vorder- und Rückflanke an eine Impulsgeneratorschaltung 64 liefert, die beim Auftreten der Vorderflanke jedes Rechteckimpulses 62 einen kurzen Rechteckimpuls 66 an einen Eingang einer zweiten UND-Schaltung 68 liefert.

Den zweiten Eingängen der UND-Schaltungen 58 und 68 wird ein trapezförmiges x-Ablenksignal 70 von einer x-Ablenkschaltung 72 zugeführt, die die x-Ablenkung während der Messperioden, in der der Messtriangel 22 durchlaufen wird, bewirkt. Die y-Ablenkung wird durch eine y-Ablenkschaltung 74 bewirkt, die während jeder Messperiode ein Sägezahnsignal 76 erzeugt, wie es in Fig. 5B dargestellt ist.

Die x-Ablenkschaltung 72 kann beispielsweise einen Oszillator 78 enthalten, dessen Ausganssignal durch eine Impulsformungsschaltung 80 in eine Folge von Rechteckimpulsen konstanten Flächeninhalts umgewandelt wird. Diese Rechteckimpulse werden dem einen Eingang einer Torschaltung 82 direkt und einem Eingang einer Torschaltung 84 über einen Inverter 86 zugeführt. Die Ausgänge der Torschaltungen 82 und 84 sind miteinander und mit einem Integrierkondensator 88 verbunden. Die Torschaltung 82 wird während der ansteigenden Flanke 70 des trapezförmigen x-Ablenksignals jeder Messpe-

riode durch einen Torimpuls T₁ (Fig. 5G) durchgeschaltet, so dass sie dann die Impulse von der Impulsformungsschaltung 80 zum Integrierkondensator 88 durchlässt, wo sie unter Erzeugung der ansteigenden Flanke 70a integriert werden. Die Frequenz des Ausgangssignals des Oszillators 78 ist so hoch, dass die ansteigende Flanke 70a, die ja in der Praxis eine Treppenfunktion ist, genügend glatt ist.

Die Torschaltung 84 wird während der abfallenden Flanke 70b des trapezförmigen x-Ablenksignals 70 durch einen Torimpuls T₂ durchgeschaltet. Da die von der Torschaltung 84 dann durchgelassenen Impulse wegen des Inverters 86 die entgegengesetzte Polarität haben wie die Impulse von der Torschaltung 82, wird die Ladung am Kondensator 88 unter Erzeugung der abfallenden Flanke 70b wieder bis auf null verringert. Die Torimpulse T₁ und T₂ werden durch einen Taktgeber 90 erzeugt, der in bekannter Weise aufgebaut sein kann.

Die y-Ablenkschaltung 74 ist ähnlich aufgebaut. Sie enthält eine Torschaltung 92, der die Impulse von der Impulsformerschaltung 80 über einen Inverter 94 zugeführt werden und eine zweite Torschaltung 96, der die Impulse von der Impulsformungsschaltung 80 über eine nichtinvertierende Verstärkerschaltung 98 zugeführt werden, die den doppelten Verstärkungsgrad hat wie der Inverter 94. Die Ausgänge der Torschaltungen 92 und 96 sind miteinander und einem Integrierkondensator 100 verbunden. Die Torschaltung 92 wird während der abfallenden Fanken 76 und 76c des Sägezahnsignals 76 durch Torimpulse T₃ vom Taktgeber 90 durchgeschaltet, während die Torschaltung 96 während der ansteigenden Flanke 76b des Sägezahns durch einen Torimpuls T₄ vom Taktgeber 90 durchgeschaltet wird. Da die Impulse, die von der Torschaltung 96 durchgelassen werden, wegen des Unterschiedes der Verstärkungsgrade des Inverters 94 und der Verstärkerschaltung 98 die doppelte Amplitude haben wie die Impulse von der Torschaltung 92, ist die ansteigende Flanke 76b steiler als die Flanken 76a und 76c.

Die in Fig. 5G und 5H dargestellte Polarität und Amplitude der Steuerimpulse T₁ bis T₄ soll die Polarität bzw. Amplitude der Impulse versinnbildlichen, die von den betreffenden Torschaltungen 82, 84, 92 bzw. 96 während der Dauer der betreffenden Impulse durchgelassen werden.

Das x-Ablenksignal, das am Integrierkondensator 88 entsteht, wird dem Signaleingang der Torschaltungen 58 und 68 zugeführt. Die den Steuereingängen dieser Torschaltungen zugeführten Impulse von den Impulsgeneratorschaltungen 54 und 64 schneiden also aus der Flanke 70a des trapezförmigen x-Ablenksignals 70 jeweils einen Impuls (z.B. den Impuls 102 in Fig. 5F) aus, dessen Amplitude der Amplitude des trapezförmigen x-Ablenksignals 70 im Augenblick des Auftretens der Vorderflanke des Impulses 52 bzw. 62 entspricht.

An die Ausgänge der Torschaltungen 58 bzw.

68 sind Halteschaltungen 104, 106 angeschlossen, die die abgetastete Signalamplitude bis zur nächsten Abtastung während der nächsten Messperiode halten. Am Ausgang der Halteschaltung 104 steht also ein Signal zur Verfügung, das $S_R$ entspricht, während am Ausgang der Halteschaltung 106 ein Signal zur Verfügung steht, das $S_B$ entspricht. Bei Soll-Lage des Strahlauftreffpunktes sind sowohl $S_R$ als auch $S_B$ gleich $S_0$.

Zur Bildung der zur Realisierung der Gleichung (4) benötigten Differenzen dienen zwei als Differenzverstärker 108 und 112 dargestellte Subtrahierschaltungen. Die beiden Eingänge des Differenzverstärkers 108 sind mit den Ausgängen der Halteschaltungen 104 und 106 verbunden. Der eine Eingang des Differenzverstärkers 112 ist mit dem Ausgang der Halteschaltung 106 verbunden, während am anderen Eingang eine Vorspannung entsprechend $S_0$ liegt, die von einer vorzugsweise einstellbaren Vorspannungsquelle 114 erzeugt wird.

Der Ausgang des Differenzverstärkers 108 ist über einen Verstärker 116, dessen Verstärkungsgrad verstellbar ist, so dass der Faktor tg $\alpha$ . tg $\phi$ eingestellt werden kann, mit einem Eingang einer Summierschaltung 120 verbunden. Mit dem anderen Eingang der Summierschaltung ist der Ausgang des Differenzverstärkers 112 verbunden. Am Ausgang der Summierschaltung 120 steht also ein Signal zur Verfügung, das proportional $\Delta x$ ist. Dieses Signal wird vorzugsweise über ein Amplitudeneinstellglied 122, z.B. ein Potentiometer (oder ein regelbarer Verstärker) einer weiteren Summierschaltung 124 zugeführt, in der es mit dem x-Ablenksignal vom Integrierkondensator 188 vereinigt wird. Das kombinierte x-Ablenksignal wird über einen Leistungsverstärker 126 x-Ablenkspulen 128 der sonst nicht näher dargestellten Elektronenstrahl-Schweissmaschine zugeführt, die in bekannter Weise ausgebildet sein kann.

Wenn die Strahlauftreffstelle ihre Soll-Lage hat, sind $S_R$ und $S_B$ beide gleich $S_0$, so dass die Ausgangssignale der Differenzverstärker 108 und 112 ebenfalls gleich Null sind. Die Verhältnisse bei Soll-Lage des Strahlauftreffpunktes sind in der linken Seite der Fig. 5 dargestellt.

Die rechte Seite der Fig. 5 gilt für Verhältnisse, wie sie anhand des unteren Teiles der Fig. 3 erläutert wurden. Die Impulse 56 und 66 treten nicht mehr in der Mitte der ansteigenden Flanke 70a des trapezförmigen x-Ablenksignals auf (Zeitpunkt t₄), sondern zu Zeitpunkten t'₄ bzw. t''₄, wie durch die Impulse 56' bzw. 66' dargestellt ist. Dementsprechend haben auch die Ausgangsimpulse 102' bzw. 102'' der Torschaltungen 58 bzw. 68 eine vom Soll-Wert (Impuls 102; entsprechend $S_0$) abweichende Amplitude, so dass ein Korrektursignal entsteht, das die Abweichung $\Delta x$ kompensiert. Im übrigen dürfte die Arbeitsweise der Einrichtung aus der obigen Erläuterung in Verbindung mit den Fig. 4 und 5 ersichtlich sein.

Bei dem oben beschriebenen Ausführungsbeispiel wurde nur die eine Seitenflanke 22a des Messtriangels zu Messzwecken ausgenutzt und daher nur eine etwaige Abweichung der Oberfläche des einen Werkstückteils 10a erfassen. Gewünschtenfalls kann jedoch auch die andere Seitenflanke 22b des Messtriangels zu Messzwecken ausgenutzt und auch die Lage der Oberfläche des Werkstückteils 10b erfasst werden. Man braucht hierzu nur zusätzliche Impulsgeneratorschaltungen entsprechend den Impulsgeneratorschaltungen 54 und 64 verwenden, die auf die Rückflanke der Impulse 52 bzw. 62 anspricht. Die von diesen Impulsgeneratorschaltungen erzeugten Torimpulse steuern dann weitere Torschaltungen entsprechend den Torschaltungen 58 und 68, deren Ausgangssignale dann entsprechend zu einem weiteren Signal $\Delta x'$ verarbeitet werden, wie es oben für die Erzeugung des Signals $\Delta x$ beschrieben wurde. Aus dem Signal $\Delta x$ und dem Signal $\Delta x'$ kann beispielsweise in einer Schaltungsanordnung 132 ein Mittelwert gebildet werden und dieser Mittelwert kann dann als Korrektursignal der Addierschaltung 124 zugeführt werden. Eine zusätzliche oder alternative Verwendung des Signals $\Delta x'$ besteht darin, ein Signal entsprechend dem Absolutwert der Differenz $(\Delta x - \Delta x')$ zu bilden und ein Warnsignal zu erzeugen, wenn diese Differenz einen vorgegebenen Wert überschreitet. Hierzu können beispielsweise zwei Differenzverstärker (für positive bzw. negative Differenzen) mit angeschlossener Schwellwertschaltung, deren Ausgänge über ein ODER-Glied mit einer Alarmschaltung verbunden sind, verwendet werden.

Ein dem mittleren Höhenniveau der Oberflächen der Werkstückteile 10a und 10b entsprechendes Korrektursignal $\Delta x$ kann auch durch Realisierung der folgenden Gleichung erzeugt werden:

$$\Delta \overline{x} = (S_B - S_0) + tg\,\alpha \cdot tg\,\phi \cdot \frac{S^a_R + S^b_R}{2}) \qquad (5)$$

Diese Gleichung lässt sich unter Verwendung der Schaltungsanordnung gemäss Fig. 4 unter Zusatz der oben in Fig. 4 gestrichelt gezeichneten Schaltungsteile realisieren: An den Ausgang der Impulsformungsschaltung 50 ist eine zusätzliche Impulsgeneratorschaltung 54' angeschlossen, die auf die Rückflanken der Ausgangsimpulse 52 der Impulsformungsschaltung 50 anspricht. Die Ausgangsimpulse 56' (Fig. 5E) der Impulsgeneratorschaltung 54' steuern eine zusätzliche Torschaltung 58', deren Signaleingang mit dem Integrierkondensator 88 und deren Signalausgang mit einer Halteschaltung 104' verbunden sind. Das Ausgangssignal der Halteschaltung 104' wird zusammen mit dem Ausgangssignal der Halteschaltung 104 einer Mittelwertbildungsschaltung 140 zugeführt, in der die Ausgangssignale der Halteschaltungen 104 und 104' summiert und so in der Amplitude eingestellt werden, dass das den Differenzverstärker 108 zugeführte Ausgangssignal der Schaltungsordnung 140 dem rechten Klammerausdruck in der Gleichung (5) entspricht.

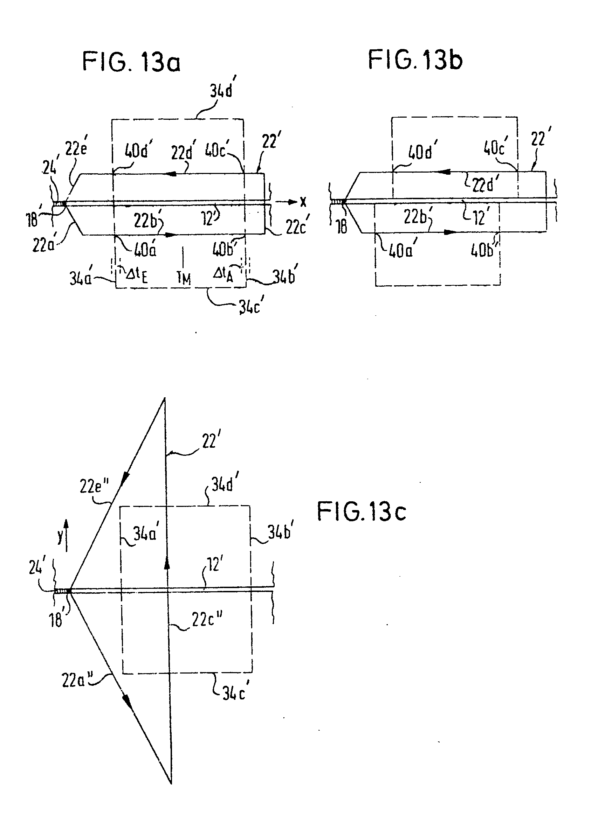

Nach dem oben erwähnten Prinzip lassen sich auch unerwünschte Verschiebungen des Strahlauftreffpunktes in y-Richtung (oder genauer gesagt Verschiebung der mittleren Strahlrichtung in y-Richtung am Ort der Werkstückoberfläche), die durch Störmagnetfelder mit x-Komponente verursacht werden, erfassen. An die Stelle des Nadelsensors, der bei dem oben erwähnten bekannten Verfahren zur Erfassung von unerwünschten Strahlabweichungen in y-Richtung dient, tritt dann eine weitere Messfeldgrenze 150 (Fig. 1), die parallel zur Schweissrichtung (x) und im Abstand von der mittleren Strahlrichtung 30 (also im Abstand von der Fuge 12) verläuft und bei dem Beispiel gemäss Fig. 1 senkrecht auf der Werkstückoberfläche steht. Die Messfeldgrenze 150 kann durch einen eigenen Sensor 152, z.B. einem Röntgensensor, definiert werden, vorzugsweise wird sie jedoch durch eine scharfe seitliche Messfeldgrenze (34d' in Fig. 13a und 13c) eines einzigen Sensors 27' (Fig. 9) gebildet, wie anhand der Fig. 9 bis 14 noch erläutert werden kann.

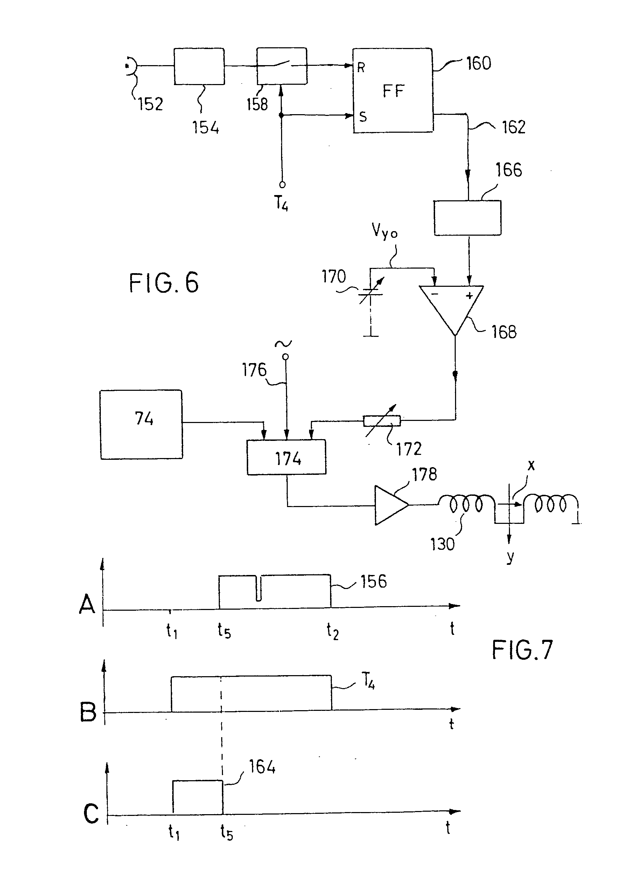

Die Schaltungsanordnung gemäss Fig. 4 kann bei Verwendung des zusätzlichen Sensors durch eine Schaltungsanordnung der in Fig. 6 dargestellten Art ergänzt werden. Der zusätzliche Sensor kann z.B. ein Röntgensensor 152 entsprechend den Sensoren 24 und 26 sein. An seinen Ausgang ist eine Impulsformungsschaltung 154 angeschlossen, die der Impulsformungschaltung 50 bzw. 60 entspricht und ein Ausgangssignal 156 (Fig. 7A) mit steilen Flanken erzeugt. Der Ausgang der Impulsformungsschaltung 154 ist über eine Torschaltung 158 mit einem Rücksetzeingang R eines Flipflops 160 verbunden. Dem Steuereingang der Torschaltung 158 wird das impulsförmige Steuersignal $T_4$ (Fig. 5H) zugeführt, so dass die Torschaltung 158 durchlässig ist, während der Strahl die Basisseite 22c des Messtriangels 22 (Fig. 1) durchläuft.

Das Steuersignal $T_4$ wird gleichzeitig einem Setzeingang S des Flipflops 160 zugeführt, das durch die ansteigende Vorderflanke des Steuersignals $T_4$ gesetzt wird und im gesetzten Zustand auf einer Ausgangsleitung 162 ein Ausgangssignal 164 (Fig. 7C) erzeugt. Die Rücksetzung des Flipflops erfolgt zu einem veränderlichen Zeitpunkt $t_5$ durch die Vorderflanke des geformten Ausgangssignals 156 des Sensors 152, so dass also die Dauer des Ausgangssignals 164 des Flipflops der Zeit entspricht, die der Strahl während der Messperiode vom Anfang der Basisseite 22c bis zur Sichtbereichsgrenze 150 benötigt. Diese Strecke ist in Fig. 1 mit $y_1$ bezeichnet.

Das Ausgangssignal 164 des Flipflops 160 wird durch eine Integrierschaltung 166 integriert und in eine Gleichspannung entsprechender Grösse verwandelt, die einem Eingang einer als Differenzverstärker 168 dargestellten Subtrahierschaltung zugeführt wird. Dem anderen Eingang der Subtrahierschaltung wird eine Spannung $V_{yo}$ von einer verstellbaren Vorspannungsquell 170 zugeführt. Die Spannung $V_{yo}$ entspricht dem Sollwert von $y_1$, also dem Wert, den die Strecke zwischen dem Anfang der Basisseite 22c und der Sichtbereichsgrenze 150 hat, wenn kein Störmagnetfeld vorhanden ist. Am Ausgang des Differenzverstärkers 168 tritt also eine Fehlerspannung auf, die nach Betrag und Vorzeichen die störmagnetfeldbedingten Verschiebungen des Strahlauftreffpunktes in y-Richtung darstellt. Diese Fehlerspannung wird über ein Amplitudeneinstellgerät 172 einer Summierschaltung 174 zugeführt, in der die Fehlerspannung mit der y-Ablenkspannung 76 (Fig. 5B) bzw. einer den Strahl zwischen den Messperioden in y-Richtung ablenkenden Wedelspannung vereinigt wird. Die Wedelspannung kann eine Sinusspannung von beispielsweise einigen 100 bzw. 1000 Hz Frequenz sein und wird über eine Leitung 176 zugeführt. Der Ausgang der Summierschaltung ist über einen entsprechenden Leistungsverstärker 178 mit den y-Ablenkspulen 130 gekoppelt.

Die beschriebenen Ausführungsbeispiele lassen sich selbstverständlich in der verschiedensten Weise abwandeln und die erläuterten Massnahmen lassen sich zum Teil auch einzeln oder in anderen Kombinationen als sie oben beschrieben wurden, verwenden. Die in x-Richtung gerechnete Höhe des Messtriangels kann zum Beispiel 6 mm betragen, die Länge der Basisseite 22c kann ebenfalls gleich 6 mm sein. Eine Messperiode, also die Zeit zwischen $t_0$ und $t_3$ (Fig. 5A) kann einige Millisekunden, z.B. 2 Millisekunden betragen und die Messperioden können mit einer Wiederholungsfrequenz von beispielsweise 1 Hz bis einigen hundert Hertz aufeinander folgen.

Die Strahlspannung und der Strahlstrom, also die Strahlleistung, sind während der Messperiode vorteilhafterweise gleich denen während des Schweissens bzw. Bearbeitens. Die Geschwindigkeit, mit der der Strahl während der Messperiode abgelenkt wird, ist zweckmässigerweise so hoch, dass keine unerwünschte Beeinflussung des Werkstücks eintritt.

Ein Röntgenstrahlungssensor enthält gewöhnlich eine Art von Zählrohr oder einen Szintillationskristall in Kombination mit einem Photomultiplier. Solche Sensoren liefern ein Ausgangssignal, das aus kurzen Impulsen besteht, deren Häufigkeit (Anzahl pro Zeiteinheit) von der Intensität der Röntgenstrahlung abhängt.

Es hat sich gesetzt, dass die Genauigkeit der Bestimmung des Zeitpunktes, in dem der Strahl die Sensormessbereichsgrenzen durchläuft, von einer Reihe Parametern, u.a. der Strahlstromstärke und der Strahlfokussierung (also dem Strahldurchmesser an der Werkstückoberfläche) abhängt. Die Anstiegzeit der Häufigkeitsfunktion für die vom Sensor gelieferten Impulse ändert sich nämlich z.B. bei Veränderungen der Strahlungsintensität und damit auch der Zeitpunkt, zu dem eine Zählwertschwelle (also eine bestimmte Impulszahl pro Zeiteinheit oder Impulshäufigkeit) erreicht wird, durch die die Überschreitung der Messbereichsgrenze definiert wird. Mit zunehmendem Strahlfleckdurchmesser und bei abnehmender Strahlstromstärke sinkt die Steilheit des Anstiegs bzw. Abfalls der Häufigkeitsfunktion des Sensorausgangssignals, auch können statistisch bedingte zeitliche Verschiebungen dieser Anstiegs- und Abfallvorgänge auftreten, und damit wird der Zeitpunkt, zu dem der als Überschreitung der Messbereichsgrenze gewertete Zählwert erreicht wird, unsicherer. Da aus der Lage dieses Zeitpunktes zu einem Bezugszeitpunkt (z.B. dem Beginn der Messperiode) aber die Grösse des Messsignals bestimmt wird, welches dann zur Positionskorrektur benutzt wird, hängt die Genauigkeit dieser Korrektur von der Exaktheit der Bestimmung des massgeblichen Zeitpunktes ab.

Die bevorzugte Ausführungsform der Erfindung, die im folgenden unter Bezugnahme auf die Fig. 8 bis 15 beschrieben wird, gestattet eine genauere Bestimmung des für die Ableitung des Korrektursignals massgeblichen Zeitpunktes, so dass eine bessere Positionskorrektur möglich wird. Ausserdem wird bei dieser Ausführungsform nur ein einziger Sensor benötigt.

Durch Verwendung eines Sensormessbereiches mit zwei scharfen parallelen Begrenzungen, die gleiche Abstände von der Maschinenachse haben, lassen sich nämlich relativ einfach zwei um ein genau definierbares Zeitintervall — entsprechend der Ausdehnung des Messbereichs in Richtung des Messweges — auseinanderliegende Messpunkte erhalten, an denen hinsichtlich des Signalverlaufs gleiche Verhältnisse herrschen, so dass durch Bildung eines Mittelwertes aus zwei Ansprechzeitpunkten einer Schwellwertschaltung beim Ein- bzw. Austreten des Strahles in den bzw. aus dem Messbereich Einflüsse kompensiert werden, welche bei einer Einzelmessung die Genauigkeit der Zeitpunktbestimmung beeinträchtigen würden. Auch ein Messbereich mit paarweise parallelen Begrenzungen lässt sich relativ einfach mit nur einem einzigen Sensor realisieren und erlaubt je nach Richtung des Messweges die Bestimmung von Zeitpunkten für die Ableitung verschiedener Regelsignale für unterschiedliche Korrekturvorgänge.

Will man beispielsweise die Position des Strahlfleckes bezüglich der Drahtzufuhrstelle in Vorschubrichtung des Bearbeitungsvorgangs regeln, damit der Draht immer im gleichen Abstand hinter dem Brennfleck in das Schweissbad eintaucht, was für eine gleichmässige Schweissnaht von Bedeutung ist, dann kann man den Messweg so legen, dass er die beiden quer zur Vorschubrichtung verlaufenden Messbereichsgrenzen längs je eines zur Vorschubrichtung parallelen Hinlauf- und Rücklauf-Abschnittes kreuzt, so dass sich für jeden dieser Abschnitte zwei Messpunkte ergeben, nämlich wenn der Strahl in den Messbereich eintritt und wenn er ihn wieder verlässt. Während sich diese Zeitpunkte selbst — wie erläutert — nur mit einer gewissen Unsicherheit bestimmen lassen, stellt der aus ihnen gebildete Mittelwert einen wesentlich genauer bestimmten Zeitpunkt dar, weil sich bei der Mittelung die Verfälschungseffekte gegenseitig kompensieren. Der gemittelte Zeitpunkt erlaubt daher wegen der räumlich festen, bekannten Beziehung zwischen Messweg und Drahtzufuhrstelle (üblicherweise sind sowohl der Sensor als auch der Zuführmechanismus für den Zusatzdraht an einer gemeinsamen Halterung mit dem Strahlerzeugungssystem befestigt) eine wesentlich genauere Feststellung eventueller Abweichungen des gewünschten Abstandes zwischen Brennfleck und Drahtzufuhrstelle und damit eine entsprechend genauere Korrektur.

Vorzugsweise sorgt man dafür, dass sich die Höhenlage der Oberfläche des Werkstückes nicht ändert, damit sich der Sensormessbereich auf der Werkstückoberfläche nicht verschiebt. Stimmen nun aber zwei miteinander zu verschweissende Bleche in ihrer Dicke nicht überein oder sind die Oberflächen nicht ganz eben, dann liegt die Oberfläche des einen Bleches in einer anderen Höhe als diejenige des anderen. Verläuft die Achse des Gesichtsfeldes des Sensors schräg zur Werkstückoberfläche, so verschieben sich nach den Regeln der Strahlenoptik die beiden Teile des Messbereichs auf den Oberflächen der beiden Bleche beiderseits der Schweissfuge gegeneinander, so dass die Bereichsgrenzen an der Fuge nicht mehr ineinander übergehen, sondern parallel gegeneinander versetzt sind. Dadurch tritt eine entsprechende zeitliche Versetzung der Überschreitungszeitpunkte für die Messbereichsgrenzen im Hinlaufabschnitt gegenüber dem Rücklaufabschnitt des Messweges auf, so dass man bei der Mittelwertsbildung aus den Überschreitungszeitpunkten für den Hinlaufabschnitt einen anderen mittleren Zeitpunkt als für den Rücklaufabschnitt erhält, und diese beiden unterschiedlichen Zeitpunkte beziehen sich auf die eine bzw. auf die andere Oberfläche der beiden Werkstückteile. Da durch den Elektronenstrahl aber die beiden unterschiedlich hohen Kanten der beiden Bleche miteinander verschweisst werden sollen, müssen die Schweissbedingungen beiden Kanten bzw. Blechstärken gerecht werden, und es ist zweckmässig, hier einen Kompromiss zu wählen, der zwischen den beiden Optimalverhältnissen für die unterschiedlichen Blechstärken liegt. Eine zweckmässige Ausgestaltung der Erfindung besteht daher darin, aus allen vier unterschiedlichen Zeitpunkten, zu denen der Strahl auf dem Messweg die Messbereichsgrenzen überschreitet, einen zeitlichen Mittelwert zu bilden, aufgrund dessen dann das Regelsignal abgeleitet und die Korrektur durchgeführt wird.

Da wie erwähnt, die räumliche Beziehung zwischen dem auch als Strahlkanone bezeichneten Strahlerzeugungssystems, der Drahtzufuhreinrichtung — und damit der Drahteintauchstelle in das Schweissbad — und dem Sensor — und damit dem auf die Werkstückoberfläche projizierten Messbereich — bekannt ist, kann man relativ einfach die Lage des Messbereiches gegenüber der Drahteintauchstelle konstanthalten. Da der Messweg vom momentanen Brennfleck ausgeht, der nicht notwendigerweise mit der Mittelachse der Strahlkanone zusammenfällt, sondern zur Kompensation äusserer Einflüsse auf den gewünschten Bearbeitungsbereich geregelt werden muss, hängt die Lage des Messweges zu den Messbereichsgrenzen von solchen äusseren Einflüssen ab, und die Zeitpunkte der Überschreitung der Messbereichsgrenzen durch den den Messweg durchlaufenden Strahl beinhalten daher Informationen über die Lageabweichungen zwischen Brennfleck und Strahlkanonenachse bzw. den damit in bekannter räumlicher Beziehung stehenden Maschinenteilen und Positionen, wie bespielsweise der Eintauchstelle des als Zusatzmaterial für die Schweissfuge zugeführten Drahtes. Bezeichnet man wieder die Vorschubrichtung als x-Richtung, dann lassen sich in der zuvor beschriebenen Weise Abweichungen $\Delta x$ vom gewünschten Abstand zwischen Brennfleck und Drahteintauchstelle bestimmen und ausregeln.

Das bevorzugte Verfahren erlaubt aber auch die genauere Messung von Abweichungen des Brennfleckes von der Kanonenachse in der quer zur Vorschubrichtung verlaufenden y-Richtung, also seitliche Auswanderungen $\Delta y$ des Brennfleckes gegenüber der Kanonenachse. Hierzu lässt man den Strahl einen Messwegabschnitt durchlaufen, der die beiden anderen, parallel zur Schweissfuge verlaufenden Messbereichsgrenzen überquert, und bildet aus diesen beiden Überquerungszeitpunkten den Mittelwert, der bei symmetrischen bzw. ungestörten Verhältnissen mit der y-Position der Kanonenachse zusammenfällt. Ist dies nicht der Fall, dann ist der Brennfleck infolge von Störmagnetfeldern, aus dieser y-Sollage herausgewandert, d.h. seine y-Position stimmt nicht mehr mit derjenigen der Kanonen- oder Maschinenachse überein und muss durch eine entsprechende Korrektur in diese Sollage zurückgebracht werden.

Hat man es gleichzeitig mit einer mechanischen Abweichung der zu verschweissenden Fuge von der anfänglich eingestellten y-Sollposition (Kanonenachse) und einer — wie oben angenommen — magnetisch bedingten Abweichung des Brennflecks in y-Richtung zu tun, so kann man insbesondere den über die beiden fugenparallelen Massbereichsgrenzen und daher auch über die Fuge führenden Messweg des Strahls zusätzlich zu der in der eingangs bereits erwähnten DE-A-28 21 028 beschriebenen Messung des aus mechanischen und magnetischen Fehlern zusammengesetzten Gesamtversatzes der y-Relativposition zwischen Brennfleck und Fuge hinaus auch dazu benutzen, in der oben beschriebenen Weise den allein störmagnetisch bedingten y-Fehler des Strahles, bezogen auf die Kanonenachse bzw.

auf die mit der Kanone fest verbundene Drahtzufuhrdüse zu bestimmen. Bezüglich der Ausregelung des Gesamtfehlers kann man dann so vorgehen, dass die Differenz aus beiden Messungen gebildet wird, die dann nach dem bisher Gesagten allein den mechanischen y-Fehler der Fugenposition zur Kanonenachse repräsentiert. Diesen ersten Fehlerbetrag kann man durch eine entsprechende mechanische y-Bewegung des gesamten Strahlerzeugungssystems ausgleichen, während der zweite in der erläuterten Weise bestimmte rein störmagnetische y-Fehler zwischen Brennfleck und Kanonenachse durch eine entsprechende Korrektur mit Hilfe des y-Strahlablenksystems beseitigt wird. Nach Ausführung beider Korrekturen ist dann ersteres die mit dem Strahlerzeugungssystem verbundene Drahtzufuhrdüse in y-Richtung auf die Fuge und im Anschluss daran der Brennfleck in y-Richtung auf die Drahtzufuhrdüse und damit auch auf die Fuge justiert. Die Bestimmung des y-Fehlers des Brennfleckes gegenüber der Kanonenachse erfolgt in gleicher Weise wie es für den x-Fehler im einzelnen erläutert worden ist, indem man den Mittelwert aus den Ansprechzeitpunkten beim Überschreiten der fugenparallelen Mess-bereichsgrenzen bildet.

In Fig. 8 ist als Veranschaulichungsbeispiel für einen Bearbeitungsvorgang das Verschweissen zweier Bleche 14' und 16' mit Hilfe eines Elektronenstrahls dargestellt, welcher von einem Strahlerzeugungssystem oder einer Strahlkanone 30' geliefert wird. Die Position der Strahlkanone wird so eingestellt, dass der Strahl 10' die Schweissfuge 12' zwischen den Blechen 14' und 16' trifft und dort eine so hohe Energiedichte erzeugt, dass ein Brennfleck 18' entsteht, in dem das Material schmilzt. Um die Fuge 12' aufzufüllen, führt man zusätzliches Material z.B. in Form eines Drahtes 20' aus einer Düse 21' hinter dem Brennfleck 18' zu. Der Brennfleck bildet die Bearbeitungsstelle und wandert in Vorschubrichtung x längs der Fuge 12'. Die fertige Schweissnaht ist mit 24' bezeichnet.

Da die Fuge 12' zwischen den beiden Blechen nicht immer exakt geradlinig verläuft, muss man dafür sorgen, dass der Brennfleck 18' dem Fugenverlauf nachgeführt wird. Zu diesem Zweck lässt sich der Strahl 10' — bequemerweise mit Hilfe geeigneter Magnetfelder — ablenken. Ein solcher Fall ist strichpunktiert in die Zeichnung eingetragen. Ohne Ablenkung würde der Strahl 10'' neben der Fuge 12' auf die Blechoberfläche auftreffen. Mit Hilfe zweier Magneten 26' und 28' werden Magnetfelder solcher Stärke erzeugt, dass der Strahl genau in die Fuge 12' trifft und den Brennfleck 18'' erzeugt. Auch bei geradlinigem Verlauf der Fuge 12' kann eine solche Brennfleckkorrektur erforderlich sein, wenn nämlich der Strahl durch Störfelder aus seinem normalen Verlauf abgelenkt wird oder die Strahlkanone 30' nicht exakt positioniert ist. Ausser der genauen Strahlausrichtung auf die Fuge 12' ist es für eine einwandfreie Verschweissung der beiden Bleche erforderlich, dass ein optimaler Abstand in x-Richtung zwischen dem Strahlauftrefffleck und dem Zuführungspunkt des Zusatzdrahtes 20' eingehalten wird und weiterhin die Drahtzufuhrgeschwindigkeit dem Bedarf an Zusatzmaterial angepasst wird. Die hierzu erforderlichen Regelsignale werden aufgrund von Messungen der Abwei-chungen von gewünschten Sollzuständen gebil-det.

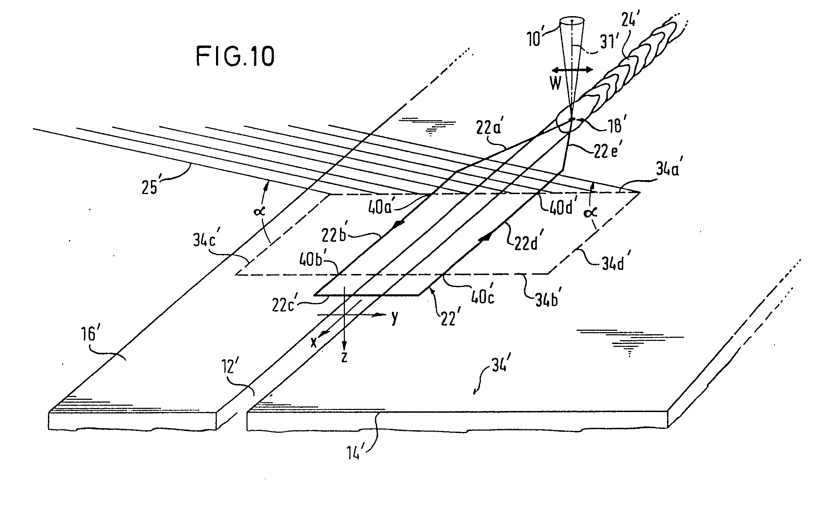

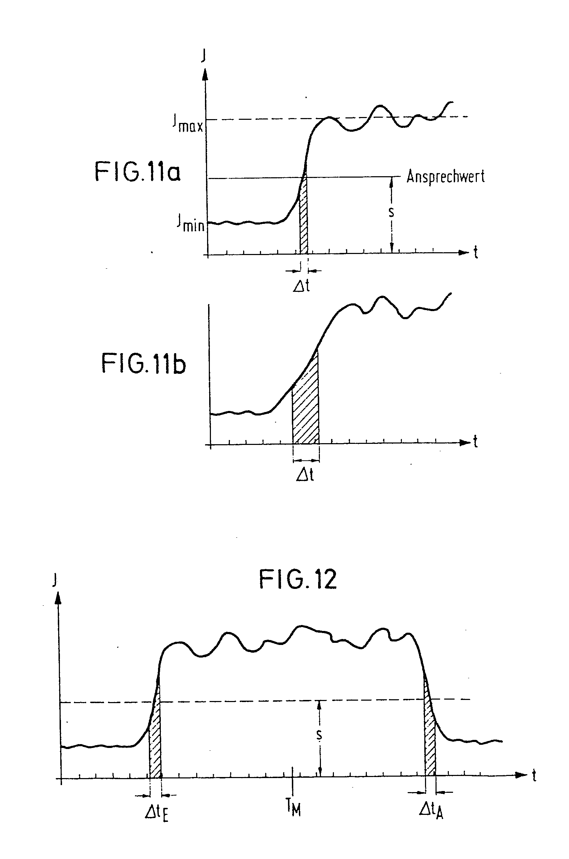

Fig. 9 zeigt nun schematisch eine Anordnung, welche solche Messungen erlaubt. Der Strahl 10', der in dieser Darstellung mit der Mittelachse 31' der Strahlkanone 30' zusammenfällt und in z-Richtung verläuft, landet im Brennfleck 18', der hier in der Blechoberfläche 34' gezeichnet ist. Für den Messvorgang, welcher den eigentlichen Schweissvorgang periodisch kurzzeitig unterbricht, wird der Strahl 10' vom Brennfleck 18' weg längs eines Messweges ausgelenkt, dessen Verlauf im einzelnen noch erläutert werden wird, und kehrt dann zur weiteren Bearbeitung zum Brennfleck 18' zurück. Mit Hilfe eines Strahlungssensors 27', der durch geeignete Kollimatoren ein Gesichtsfeld 25' hat, wird auf der Oberfläche 34' ein vor der Bearbeitungsstelle (Brennfleck 18') liegender Messbereich mit paar-weise parallelen Begrenzungslinien oder Be-reichsgrenzen festgelegt, von denen die beiden quer zur Fuge 12' verlaufenden Bereichsgren-zen 34a' und 34b' in Fig. 2 dargestellt sind, während die beiden anderen Bereichsgrenzen vor und hinter der Papierebene verlaufen. Auf dem Messweg überschreitet der in x-Richtung ausgelenkte Strahl 10' nun beim Eintreten in den Messbereich die Grenze 34a', worauf der Senhor 27' eine infolge des Auftreffens des Strahles 10' auf der Materialoberfläche 34' entstehen-de Röntgenstrahlung feststellt und dementspre-chend mehr Impulse pro Zeiteinheit liefert, also die Impulsrate vom Ruhewert auf einen Strahlungserkennungswert ändert. Verlässt der Strahl 10' den Messbereich über die Grenze 34b' wieder, dann nimmt der Sensor 27' keine Strahlung mehr wahr, und die Impulsrate fällt auf den Ruhewert zurück. Anhand der Fig. 11 und 12 werden diese Verhältnisse noch im einzelnen erläutert werden. Zur Ausbildung eines rechtwinkligen Messbereiches, wie er aus den Fig. 10 und 13 ersichtlich ist, genügt ein einziger Sensor 27'.

Fig. 10 zeigt perspektivisch die in Fig. 9 von der Seite dargestellten Verhältnisse. Hier sind auch die drei Koordinatenrichtungen, x für die Vorschubrichtung des Bearbeitungsvorgangs, y für die Querrichtung dazu und z für die Senkrechte (Richtung der Strahlkanonenachse 31'), eingezeichnet. Während des Schweissvorgangs wird der Strahl 10' in Richtung des Doppelpfeils W hin und her abgelenkt (gewedelt), so dass er die beiderseitigen Blechkanten für die Bearbeitung erfasst. Auf die Oberfläche 34' der Bleche 14' und 16' ergibt sich ein rechteckiger Messbereich mit den Bereichsgrenzen 34a'-34d' aus dem unter dem Winkel α schräg zur Oberfläche 34' gerichteten Gesichtsfeld 25' des Sensors 27' (in Fig. 10 ist durch die Strahlen aus Gründen der Übersichtlichkeit nur die dem Strahl zugewandte Grenze des Gesichtsfeldes 25' veranschaulicht, welche die Bereichsgrenze 34a' auf der Oberfläche 34' ergibt). Für die Messung wird der Bearbeitungsvorgang so kurzzeitig unterbrochen, dass der Schweissvorgang nicht gestört wird, und während der Messperiode wird der Strahl 10' durch entsprechende Ablenkung längs eines den Messbereich durchlaufenden Massweges 22' geführt, der vom Brennfleck 18' ausgeht und wieder zu ihm zurückkehrt. Bei diesem Vorgang können alle sonstigen Parameter des Strahles, wie z.B. Strahlstrom und Fokussierung, in vorteilhafter Weise konstant gelassen werden. Der Messweg 22' ist in der Darstellung der Fig. 10 so gewählt, dass er in einem schrägen Abschnitt 22a' vom Brennfleck 18' aus der Schweissfuge 12' herausläuft, dann in einen Abschnitt 22b' parallel zur Schweissfuge verläuft, wobei er an der Stelle 40a' die Messbereichsgrenze 34a' überschreitet und in den Messbereich eintritt. An der Stelle 40b' verlässt er den Messbereich wieder und ändert anschliessend seine Richtung, um einem Abschnitt 22c' zu folgen, während dessen er den Spalt 12' überquert. Nach abermaliger Umlenkung folgt er einem Abschnitt 22d', wobei er wiederum bei 40c' in den Messbereich eintritt und diesen bei 40b' verlässt. Anschliessend kehrt er auf einem Abschnitt 22e' zum Brennfleck 18' zurück.

An den Überschreitungspunkten 40a' bis 40d' ändert sich das Ausgangssignal des Sensors 27', da dieser nur die Hintergrundstrahlung wahrnimmt, solange der Strahl 10' sich ausserhalb des von den Grenzen 34a' bis 34d' eingeschlossenen Messbereiches befindet. Die Röntgenstrahlung, welche von ausserhalb des Messbereichs liegenden Stellen der Oberfläche 34' beim Auftreffen des Strahles 10' entsteht, wird vom Sensor nicht wahrgenommen. Tritt der Strahlauftreffpunkt dagegen in den Messbereich ein, so gelangt die von diesem Auftreffpunkt ausgehende Röntgenstrahlung zum Sensor, der sie durch ein sprungartiges Anwachsen seiner Ausgangsimpulsrate oder der Häufigkeitsfunktion registriert. Solange also der Strahl 10' innerhalb des Messbereiches mit den Grenzen 34a' bis 34d' auf die Materialoberfläche 34' auftrifft, ist die Impulsrate des Sensors 27' höher als bei Strahlauftreffpunkten ausserhalb des Messbereiches.

Die Verhältnisse bei derartigen Änderungen des Sondenausgangssignals seien nun anhand der Fig. 11 und 12 betrachtet, welche die im Messbereich festgestellte Strahlungsintensität, und damit die Grösse der Impulsrate J, über der Zeit zeigen. Bei optimaler Fokussierung tritt gemäss Fig. 11 ein relativ steiler Sprung auf, wenn der Strahl z.B. die Grenze 34a' des Messbereiches im Punkt 40a' überschreitet und in den Messbereich eintritt. Da die Impulsrate vor und hinter dem Sprung nicht absolut konstant verläuft, sind der untere und der obere Mittelwert in die Figur eingetragen. Diese Werte können für bestimmte Bearbeitungsfälle praktisch als konstant angesehen werden, und daher kann ein zwischen ihnen liegender Schwellwert für die Impulsrate festgelegt werden, bei dem eine Auswertschaltung, welcher das Sensorausgangssignal zugeführt wird, ansprechen soll und auf diese Weise den Zeitpunkt der Überschreitung der Messbereichsgrenze durch den Strahl signalisieren soll. Nun lässt sich aber der Zeitpunkt des Auftretens einer bestimmten Impulsrate nur innerhalb eines gewissen Toleranzbereiches $\Delta t$ definieren, innerhalb dessen dann die Schwellenwert- oder Auswertschaltung irgendwann einmal anspricht.

Gegenüber Fig. 11a zeigt Fig. 11b einen Fall grösseren Strahldurchmessers (Defokussierung), der dazu führt, dass die Änderung der Häufigkeitsfunktion langsamer als in Fig. 11a vor sich geht und der Zeitbereich $\Delta t$, innerhalb dessen die Auswertschaltung anspricht, entsprechend grösser wird, so dass der Überschreitungszeitpunkt noch weniger genau bestimmbar, also unschärfer wird. Eine ähnliche Wirkung tritt bei zu kleinem Strahlstrom auf, wo die Strahlungsintensität nicht so stark ist und daher die obere Impulsrate niedriger liegt, so dass der Zählwert bei dem die Auswertschaltung anspricht, eher in dem flacher verlaufenden oberen Teil der Häufigkeitskurve auftritt. Auch hierdurch wird der Unschärfebereich $\Delta t$ grösser als im Falle der Fig. 11a.

Anhand von Fig. 12 sei nun erklärt, wie sich vermeiden lässt, dass diese Unschärfe der Zeitpunktsbestimmung in das zu erzeugende Regel- bzw. Korrektursignal eingeht. Der festgestellte Zeitpunkt des Überschreitens der Messbereichsgrenze durch den Strahl tritt irgenwann im Unschärfebereich $\Delta t$ auf, der für das Eintreten des Strahles in den Messbereich mit $\Delta t_E$ und für das Austreten des Strahles aus dem Messbereich mit $\Delta t_A$ bezeichnet ist. Da nun für die beiden Messbereichsüberschreitungen praktisch dieselben Verhältnisse vorliegen, ergibt eine Mittelung der tatsächlichen Ansprechzeitpunkte einen genauer definierten Zeitpunkt $T_M$, dessen Lage hinsichtlich eines geeignet gewählten Bezugszeitpunktes ein Mass für die Bildung des Regelsignals ist. Ein aufgrund dieses Zeitpunktes $T_M$ abgeleitetes Regelsignal erlaubt somit eine wesentlich genauere Positionskorrektur als ein Regelsignal, das aufgrund irgendeines innerhalb des Unschärfeintervalls $\Delta t$ nicht näher definierten Schaltzeitpunktes abgeleitet wird.

Fig. 13 veranschaulicht nur einige Messwegformen für die Ableitung verschiedener Regelsignale. Gemäss Fig. 13a wird der rechteckige Messbereich mit den Grenzen 34a' bis 34d' von einem in Vorschubrichtung x langgestreckten Messweg 22' mit den Abschnitten 22a' bis 22e' durchlaufen. Auf dem Hinlaufabschnitt 22b' kreuzt der Messweg die Messbereichsgrenzen 34a' und 34b' an den Punkten 40a' und 40b', und im Verlaufe dieses Messwegabschnittes sieht das Sensorausgangssignal etwa so aus wie es in Fig. 12 dargestellt ist. Anstatt sich auf einen Einzelschaltzeitpunkt, etwa bei 40a' oder bei 40b' mit dem Unschärfebereich Δt zu verlassen, wird also bei dem hier beschriebenen Verfahren der wesentlich exaktere zeitliche Mittelwert T$_M$ zwischen den tatsächlichen Schaltzeitpunkten an den Punkten 40a' und 40b' bestimmt, der die genaue Mitte des Messbereichs längs dessen Grenzen 34c' und 34d' definiert. In der Figur sind zur Veranschaulichung die Unschärfebereiche Δt$_E$ und Δt$_A$ sowie der exakte mittlere Zeitpunkt T$_M$ angedeutet. Nach Überschreiten der Messbereichsgrenze 34b' überquert der Messweg mit seinem Abschnitt 23c' die Fuge 12' und kehrt dann auf den spiegelbildlichen Abschnitten 22d' und 22e' zum Brennfleck 18' zurück.

Liegen die Oberflächen der beiden zu verschweissenden Bleche 14' und 16' nicht in derselben Ebene Z, so verschieben sich die beiden Messbereichshälften wegen der unter dem Winkel α schrägen Projektion des Gesichtsfeldes 25' des Sensors 27' auf die unterschiedlichen Oberflächenebenen in der in Fig. 13b dargestellten Weise. Bei einer solchen Verschiebung der Messbereichshälften erhält man vier verschiedene Zeitpunkte für die Überschreitung der Messbereichsgrenzen, da die Überschreitungspunkte 40a' und 40d' ebenso wie die Überschreitungspunkte 40b' und 40c' nicht mehr spiegelbildlich zueinander liegen. Bildet man nun den zeitlichen Mittelwert aus den den Punkten 40a' und 40b' entsprechenden Zeitpunkten, so erhält man einen anderen Mittelwert T$_M$ als für die Punkte 40c' und 40d'. Ma man aber andererseits den Bearbeitungsvorgang nicht gleichzeitig auf zwei in unterschiedlichen Höhen liegende Werkstückoberflächen optimieren kann, muss man in einem solchen Falle einen Kompromiss eingehen und die Parameter auf einen Mittelwert zwischen den beiden Oberflächenhöhen einstellen. Als massgebenden Wert für die Ableitung eines entsprechenden Regelsignals kann man zweckmässigerweise den Mittelwert zwischen den beiden zum Hinlaufabschnitt 22b' und zum Rücklaufabschnitt 22d' gehörigen Mittelwerten T$_M$ nehmen, welcher den Mittelwert aus allen vier Zeitpunkten für die Bereichsüberschreitungsstellen 40a' bis 40d' darstellt. Die zeitliche Lage dieses Mittelwertes zu einem in geeigneter Weise wählbaren Bezugszeitpunkt dient dann als Grundlage für die Bildung des gewünschten Regelsignals.

Mit Messwegformen, bei welchen der Messbereich auf einer definierten Strecke durchlaufen wird, auf der quer zur Vorschubrichtung x verlaufende Messbereichsgrenzen, wie die Grenzen 34a' und 34b' überkreuzt werden, wofür Beispiele in den Fig. 13a und 13b gegeben sind, lässt sich die Lage des Brennfleckes 18' hinsichtlich eines Maschinenbezugspunktes — etwa der Strahlkanonenachse — in x-Richtung bestimmen und in einer gewünschten Weise regeln, so dass beispielsweise der Abstand zwischen Brennfleck 18' und Eintauchstelle des Zusatzdrahtes 20' in das Schweissbad in x-Richtung auf einem Optimalwert gehalten werden kann.

Für die Lagebestimmung in y-Richtung eignet sich ein Messweg, wie er in Fig. 13c als Dreieck dargestellt ist, dessen einer Eckpunkt im Brennfleck 18' liegt und dessen gegenüberliegende Seite 22c'' die Messbereichsgrenzen 34c' und 34d' sowie dazwischen die Fuge 12' überquert. Die Hin- und Rücklaufabschnitte des Messweges sind mit 22a'' und 22e'' bezeichnet. Beim Überschreiten der Messbereichsgrenzen 34c' und 34d' entsteht wiederum ein Sensorausgangssignal mit einer Häufigkeitskurve der in Fig. 12 veranschaulichten Art. Durch Mittelung der Schaltzeitpunkte, welche dem Überschreiten der Grenzen 34c' und 34d' entsprechen, erhält man wieder einen genauen Zeitwert für die Ableitung eines Regelsignals für eine Δy-Positionsregelung, etwa zur Spurregelung der Drahtzufuhrstelle bezüglich des Brennfleckes.

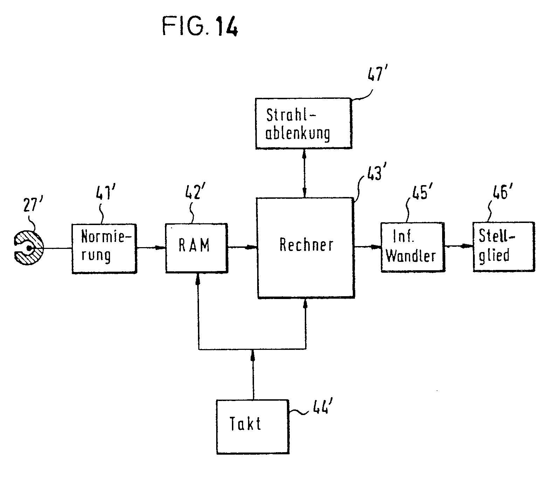

In Fig. 14 ist schematisch eine Anordnung veranschaulicht, mit Hilfe deren die Sensorsignale zur Bildung der gewünschten Regelsignale ausgewertet werden können. Auf Grund der im Messbereich festgestellten Röntgenstrahlung gibt der Sensor 27' Impulse ab, deren Häufigkeit der Strahlungsintensität entspricht. Diese Impulse werden einer Normierungsschaltung 41' zugeführt, in welcher die Impulse einer Impulsformung unterworfen werden. Ferner wird festgestellt, wieviel Impulse pro Zeiteinheit auftreten, und die entsprechenden Zählwerte werden dann in einen Zwischenspeicher 42', etwa in Form eines RAM-Speichers, abgespeichert. Aus diesem Zwischenspeicher werden die Zählwerte aus den abgerufenen Speicherplätzen in einen Rechner 43' überführt; hierzu kann eine Taktschaltung 44' dienen, welche die ON-LINE in den Zwischenspeicher 42' eingegebenen Zählwerte im Rechnertakt ausspeichern lässt.

Der Rechner 43' steht auch in Verbindung mit der Strahlablenkschaltung 47' und berechnet aufgrund der den Messweg bestimmenden Strahlablenksignale und der dem Zwischenspeicher 42' entnommenen Zählwerte die massgeblichen Zeitpunkte, einschliesslich des Mittelwertes T$_M$, und rechnet schliesslich auch die gewünschten Regelsignale aus. Die entsprechenden Ausgangssignale des Rechners 43' werden mit Hilfe eines Informationswandlers 45', der üblicherweise auch als Interface bezeichnet wird, in solche Regelsignale umgewandelt, die sich zur Zuführung an das jeweilige Stellglied z.B. die Ablenkspulen 26' und 28' (Fig. 8) 46' eignen, welches dann die gewünschte Korrektur der Position der Strahlkanone oder Strahlablenkung bewirkt. Der Strom in den Spulen 26' und 28' kann durch die Regelsignale gegenläufig sc geändert werden, dass sich eine gewünschte Parallelversetzung des Strahls 10'' ergibt. Die Regelsignale können andererseits oder zusätzlich einer Supportsteuerung (nicht dargestellt) zugeführt werden, die die Werkstückanordnung in y-Richtung so verschiebt, dass der Strahl bezüglich der zu verschweissenden Fuge zentriert wird.

Bei den meisten bekannten Systemen der oben beschriebenen Art wird die Strahlintensität während der Messperiode herabgesetzt. Hierdurch ändern sich jedoch die elektronenoptischen Verhältnisse, was zu Justierfehlern führen kann. Bei dem Verfahren und der Einrichtung gemäss der Erfindung wird daher vorzugsweise während der Messperiode mit der gleichen Strahlleistung gearbeitet wie während des eigentlichen Bearbeitungsvorganges, z.B. des Schweissens.

In vielen Fällen sind jedoch die Strahlparameter, die für den Bearbeitungsvorgang optimal sind verschiedenen von den Strahlparametern, die für den Messvorgang optimal sind.

Ein typisches Beispiel hierfür ist das Härten eines Werkstücks mit einem Elektronenstrahl, bei dem man einen Elektronenstrahl relativ grossen Querschnitts verwendet, was für Messzwecke ungünstig ist, wie oben anhand der Fig. 11a und 11b erläutert wurde. Auch beim Schweissen wird der Strahl häufig nicht so scharf wie möglich auf die Werkstückoberfläche fokussiert.

Dieses Problem, das bei allen Messverfahren dieses generellen Typs auftritt, unabhängig von den Konfiguration des Messweges und der Art der physikalischen Grösse, die beim Durchlaufen des Messweges erfasst wird (Fremdenstrahlung, Sekundärelektronen, Licht usw.) wird gemäss einem weiteren Aspekt der vorliegenden Erfindung dadurch zumindest weitgehend gelöst, dass der Strahlquerschnitt während des Durchlaufens des Messweges so geändert wird, dass sich genauere Messwerte ergeben, als mit dem während des Bearbeitungsvorganges verwendeten Strahlquerschnitt.

Für die Änderung des Strahlquerschnitts gibt es zwei Möglichkeiten: Erstens kann man den Astigmatismus des Strahles ändern und zweitens kann man den Fokussierungszustand des Strahles ändern, wie im folgenden erläutert wird:

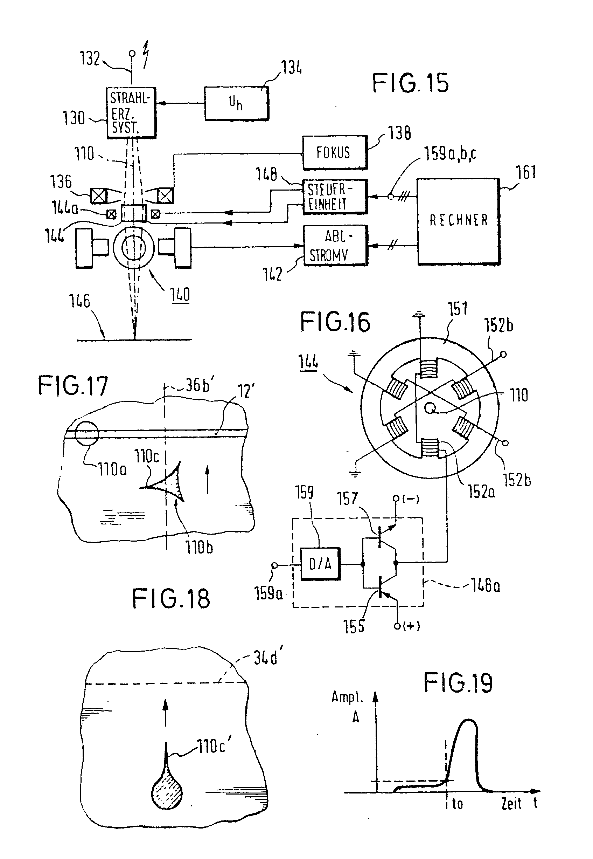

In Fig. 15 ist ein Elektronenstrahl-Schweissgerät schematisch dargestellt, das ein Strahlerzeugungssystem 130 mit einem Hochspannungsanschluss 132 und einer Heizspannungsversorgung 134, eine Fokussierungslinse 136 mit einem Linsenstromversorgungsgerät 138 und eine übliche Ablenkanordnung 140 mit zwei Sätzen einander paarweise gegenüberliegenden Ablenkspulen enthält, die an eine Ablenkstromversorgung 142 angeschlossen sind. Soweit beschrieben, entspricht das Elektronenstrahl-Schweissgerät dem Stand der Technik.

Gemäss der Erfindung ist nun zusätzlich ein Stigmator 144 vorgesehen, der vorzugsweise zwischen der Fokussierungslinse 136 und einer zu schweissenden Werkstückanordnung 146 angeordnet ist. Der Stigmator 144 ist an eine Stigmatorsteuereinheit 148 angeschlossen.

Der Stigmator 144 und die zugehörige Steuereinheit 148 sind in Fig. 16 genauer dargestellt. Der Stigmator ist allgemein gesprochen eine Einrichtung zum Erzeugen eines Multipolfeldes, z.B. eines Sechspolfeldes. Bei Fig. 16 enthält der Stigmator 144 einen ringförmigen Magnetkern 151 mit sechs innen vorspringenden Polen und drei Wicklungen 152a, 152b und 152c. Jede der Wicklungen ist mit einer Schaltungsanordnung in der Stigmatorsteuereinheit 148 verbunden, der Einfachheit halber ist in Fig. 16 nur die Schaltungsanordnung 148a für die Wicklung 152a dargestellt. Diese Schaltungsanordnung enthält zwei mit ihren Emitter-Kollektor-Strecken zwischen eine positive (+) bzw. negative (−) Klemme einer erdsymmetrischen Spannungsquelle (nicht dargestellt) und die eine Klemme der Wicklung 152a geschaltete komplementäre Transistoren 155 bzw. 157.

Die andere Klemme dieser Wicklung liegt an Masse. Die Basiselektroden der beiden Transistoren sind mit dem Ausgang eines Digital/Analog-Umsetzers 159 gekoppelt, dessen Eingang mit einem entsprechenden Ausgang 159a eines Mikrokomputer-Rechners 161 verbunden ist. Es ist einleuchtend, dass die Schaltungsanordnung 148a durch den Rechner so gesteuert werden kann, dass ein Strom gewünschter Amplitude und Polarität durch die Wicklung 152a fliesst. Die Wicklungen 152b und 152c sind in entsprechender Weise steuerbar, so dass im Bereich des Strahles 110 ein gewünschtes Mehrpolfeld erzeugt werden kann, das eine stigmatische Verzerrung des Strahlquerschnitts bewirkt. Dies in Fig. 17 dargestellt. Der während des Schweissens runde (übertrieben gross dargestellte) Strahlquerschnitt 110a wird während des Schweissens durch das Feld des Stigmators 144 vorteilhafterweise so verformt, dass er, wie bei 110b dargestellt ist, eine feine Spitze 110c aufweist. Vorzugsweise wird die Messbereichsgrenze, z.B. die Messbereichsgrenze 34b' (siehe auch Fig. 13) so gelegt, dass der Sensor nur den durch die Spitze 110c gebildeten Teil des Strahlauftrefflecks erfasst. Wenn der Strahl dann in Pfeilrichtung über die Schweissfuge 12' abgelenkt wird, ergibt sich durch die feine Spitze ein sehr scharfes und gut definiertes Sensor-Ausgangssignal.

Wie Fig. 18 zeigt, kann es auch zweckmässig sein, den Strahl so zu «astigmatisieren», dass er eine in Abtastrichtung (Pfeil) verlaufende Spitze 110c' aufweist. In diesem Falle ergibt sich dann beim Überlaufen der Messbereichsgrenze 34d' ein Ausgangssignal mit einem Verlauf, wie er in Fig. 19 dargestellt ist. Dieser Verlauf bietet die Möglichkeit, mittels einer Schwellwertschaltung ein gut definiertes Sensorsignal zu erzeugen, das bei Fig. 19 z.B. im Zeitpunkt $t_0$ auftritt.

Der durch einen Taktgenerator gesteuerte Rechner 160 ist so programmiert, dass er in bestimmten Zeitabständen oder nach einer vorgegebenen Vorschubstrecke einen Messvorgang einleitet. Das Messprogramm wird auf einem entsprechend programmierten Speicher abgelesen. Der Ablenkstromversorgung 142 werden vom Rechner Ablenksignale zugeführt, die den gewünschten Verlauf des Messweges (z.B. 22' in Fig. 13) ergeben. Ausserdem liefert der Rechner digitale Steuersignale an die Stigmatorsteuereinheit 148, die von den Digital/Analog-Umsetzern 158 in Steuersignale für die Transistoren 155, 157 umgesetzt werden. Hierdurch wird der Strahlquerschnitt in der gewünschten Weise astigmatisch verzerrt. Im übrigen arbeitet das Gerät in der oben beschriebenen Weise.

Die beschriebene astigmatische Verformung des Strahlquerschnitts und der im Verlauf eines Bearbeitungs- und/oder Messvorganges nach Wunsch steuerbare Stigmator 144 lassen sich auch bei anderen Ladungsträgerstrahl-Bearbeitungsgeräten als sie oben beschrieben wurden, mit Vorteil verwenden.

Zur Änderung des Fokussierungszustandes des Strahles ist vorzugsweise dicht hinter der Hauptfokussierungslinse 136 eine «schnelle» Hilfsfokussierungslinse 144a angeordnet, die z.B. eine einsenkernlose Spule mit entsprechend niedriger Selbstinduktion enthalten kann, so dass das durch die Hilfsfokussierungslinse erzeugte Feld schnell umgeschaltet werden kann. Die Brechkraft der Hilfsfokussierungslinse kann z.B. bis etwa 20% der Brechkraft der Hauptfokussierungslinse 136 betragen. Die Hilfsfokussierungslinse kann durch eine Steuerschaltung ähnlich der Steuerschaltung 148a in Fig. 16 mit Strom versorgt werden.

Wenn z.B. im Zuge eines Härtungs- oder Schweissvorganges mit einem Strahl relativ grossen Querschnitts gearbeitet wird, kann man während der Messperiode mit der Hilfsfokussierungslinse 144a ein zusätzliches Fokussierungsfeld schnell erzeugen, das zusammen mit dem unverändert beibehaltenen Feld der Hauptfokussierungslinse 136 eine scharfe Fokussierung des Elektronenstrahls 110 auf die Oberfläche 146 des Werkstücks (Fig. 15) und dementsprechend sehr genaue Messwerte ergibt. Die Steuerung des Stroms der Hilfsfokussierungslinse kann durch den Rechner 161 erfolgen, wie es oben im Zusammenhang mit dem Stigmator beschrieben ist.

**Patentansprüche**

1. Verfahren zum Regeln der Position eines Strahlauftreff-Fleckes, in dem ein Ladungsträgerstrahl (14) einer Ladungsträgerstrahl-Werkzeugmaschine auf einer Werkstückanordnung (10) unter Erzeugung eines Bearbeitungsbereiches auftrifft, bezüglich einer Referenzposition (18'), wobei der von einem Strahlerzeugungssystem längs einer Systemachse (30) emittierte Ladungsträgerstrahl (14) relativ zur Werkstückanordnung (10) in einer Vorschubrichtung (x) längs einer zu bearbeitenden Zone bewegt sowie während Messperioden, deren Dauer kurz im Vergleich zu zwischen ihnen liegenden Bearbeitungsperioden ist, längs eines Messweges (22) abgelenkt wird, der die Form einer im wesentlichen geschlossenen Kurve hat, die die zu bearbeitende Zone in Vorschubrichtung (x) vor dem Bearbeitungsbereich (12) kreuzt, und wobei Röntgenstrahlung, die durch Wechselwirkung des Strahls (14) mit der Werkstückanordnung (10) während der Messperioden entsteht, durch einen Röntgenstrahlungssensor (24, 26, 152, 27') erfasst wird und ein dabei erzeugtes Messsignal zur Regelung der Strahlposition verwendet wird, dadurch gekennzeichnet, dass das Messsignal eine Funktion der Länge eines Stückes des Messweges ist, das zwischen einer Messweg-Referenzposition (18') und einer den Messweg kreuzenden Grenze (28a, 32a, 150, 34a' bis 34d') des Messbereiches des Röntgenstrahlungssensors liegt.

2. Verfahren nach Anspruch 1, dadurch gekennzeichnet, dass die Messbereichsgrenze (34c', 150) parallel zur Vorschubrichtung (x) verläuft, dass der zugehörige Messbereich auf der der Bearbeitungszone (12', 12) zugewandten Seite der Messbereichsgrenze liegt, und dass das Messsignal proportional der Länge einer quer zur Bearbeitungszone gerichteten Komponente (y) einer Strecke erzeugt wird, die der Strahl auf dem Messwege von der Messweg-Referenzposition, die auf der der Bearbeitungszone abgewandten Seite der Messbereichsgrenze liegt, zur Messbereichsgrenze benötigt.

3. Verfahren nach Anspruch 1, dadurch gekennzeichnet, dass die Messbereichsgrenze (22c, 34a') quer zur Vorschubrichtung (x) verläuft, dass der zugehörige Messbereich sich auf der dem Bearbeitungsbereich (12, 12') abgewandten Seite der Messbereichsgrenze befindet, und dass das Messsignal proportional zu der der Bearbeitungsrichtung (x) parallelen Komponente des Stückes des Messweges zwischen dem Bearbeitungsbereich und der Messbereichsze ist.

4. Verfahren nach Anspruch 2 oder 3, dadurch gekennzeichnet, dass ein Röntgenstrahlungsensor mit mindestens einem Paar paralleler Messbereichsgrenzen (22b', 22d'; 34a', 34b'; 34c', 34d') verwendet wird und dass das Messsignal eine Funktion des Mittelwertes der Strecken zwischen der Messweg-Referenzposition und den beiden parallelen Messbereichsgrenzen ist.

5. Verfahren nach Anspruch 3 oder 4 zur Regelung des in Vorschubrichtung gerechneten Abstandes des Strahlauftreff-Fleckes von der Stelle, an der ein Zusatzmaterialdraht die Werkstückoberfläche erreicht, dadurch gekennzeichnet, dass zwei Röntgenstrahlungssensoren (26, 24) vorgesehen sind, die der Systemachse (30) zugewandte ebene Messbereichsgrenzen (32a, 28a) haben, welche unterschiedliche Winkel mit einer senkrecht zur Systemachse verlaufenden Ebene 34 bilden und eine die Werkstückoberfläche enthaltende und zur Systemachse senkrechte Ebene in quer zur Vorschubrichtung (x) verlaufenden Schnittgeraden (35, 28b) schneiden, und dass ein Signal zum Regeln des erwähnten Abstandes aus den Strecken ($S_B$, $S_R$) zwischen der Strahl-Referenzposition (36a) und den Schnittgeraden erzeugt wird.

6. Verfahren nach Anspruch 5, bei welchem der Messweg zwei Flankenseiten, die sich im Bearbeitungsbereich treffen und eine sich über die Bearbeitungszone erstreckende Basisseite aufweist, dadurch gekennzeichnet, dass die Bereichsgrenze (32a) des ersten Röntgenstrahlungssensors (26) quer zur Bearbeitungszone (12) und in gleichem Abstand von der Systemachse (30) verläuft; dass die Messbereichsgrenze (28a) des zweiten Röntgenstrahlungssensors (24) einen von Null und 90 Grad verschiedenen Winkel mit der Systemachse (30) bildet und die die Werkstückoberfläche enthaltende Ebene (34) in einer Schnittgeraden (28b) schneidet, die quer zur Vorschubrichtung (x) verläuft, so dass die von den Röntgenstrahlungssensoren erzeugten Messsignale von den in Bearbeitungsrichtung (x) verlaufenden Komponenten der Strecken abhängen, die der Strahl auf einer Flankenseite des Messwegs zwischen dem Bearbeitungsbereich 12 und den jeweiligen Messbereichsgrenzen (32a, 28a) zurücklegt; dass die Lagen der beiden Messbereichsgrenzen (32a, 28a) so gewählt sind, dass ihre Schnittgeraden (35) bei der Soll-Lage der Werkstückoberfläche bezüglich der Systemachse (30) und dem Zusatzmaterialdraht (38) in der die Werkstückoberfläche enthaltenden Ebene (34) zusammenfallen, und dass ein Fehlersignal entsprechend einem Abstandsfehler $\Delta x$ durch Realisation der Gleichung

$$\Delta x = (S_B - S_o) + (S_B - S_R) . tg\alpha . tg\phi$$

zur Kompensation des Abstandsfehlers verwendet wird, wobei bedeuten:

$S_o$ = Soll-Abstand zwischen der Strahlauftreffstelle und der genannten Schnittgeraden (35);

$\alpha$ = Winkel zwischen der genannten Ebene (34) und der Messbereichsgrenze (28a) des zweiten Röntgenstrahlungssensors (24);

$\phi$ = Winkel zwischen der Achse des geraden Zusatzdrahtes (38) und der genannten Ebene (34);

$S_B$ = Signal, das mittels des ersten Röntgenstrahlungssensors (26) gewonnen wurde, und

$S_R$ = Signal, das mittels des zweiten Röntgenstrahlungssensors (24) gewonnen wurde.

7. Einrichtung für eine Ladungsträgerstrahl-Werkzeugmaschine, welche ein Strahlerzeugungssystem mit einer Systemachse (30), eine Vorschubvorrichtung zum Erzeugen einer Relativbewegung zwischen der Systemachse (30) und einer zu bearbeitenden Werkstückanordnung (10) längs einer Vorschubrichtung (x) sowie eine Strahlablenkvorrichtung enthält zum Regeln der Position eines Strahlauftreff-Fleckes des Ladungsträgerstrahls (14) auf der Oberfläche der Werkstückanordnung (10) bezüglich einer Referenzposition (18') während Perioden, in denen die Werkstückanordnung (10) durch den Ladungsträgerstrahl (14) bearbeitet wird, mit einer Ablenkschaltung, die den Ladungsträgerstrahl über die Strahlablenkvorrichtung während kurzer, zwischen die Bearbeitungsperioden eingeschalteter Messperioden längs eines Messweges (22) ablenkt, der die Form einer im wesentlichen geschlossenen Kurve hat, die eine zu bearbeitende Zone in Vorschubrichtung vor dem augenblicklichen Bearbeitungsbereich kreuzt, weiterhin mit einer Röntgenstrahlungssensoranordnung (24, 26, 152, 27') die einen auf die Werkstückoberfläche gerichteten Messbereich (28, 32, 150, 34) aufweist und die auf eine vom Ladungsträgerstrahl im Strahlauftreff-Fleck erzeugte Röntgenstrahlung anspricht, und mit einer durch das Ausgangssignal der Röntgenstrahlungssensoranordnung gesteuerte Strahlpositionsregelvorrichtung, dadurch gekennzeichnet, dass die Röntgenstrahlungssensoranordnung (24, 26; 152; 27') mindestens eine scharf definierte Messbereichsgrenze (28a, 32a, 150, 34a' bis 34d') hat, die im Abstand von der Systemachse (30) verläuft.

8. Einrichtung nach Anspruch 7, dadurch gekennzeichnet, dass die Röntgenstrahlungssensoranordnung zwei Röntgenstrahlungssensoren (24, 26) enthält, die jeweils eine der Systemachse (30) zugewandte Messbereichsgrenze (28a, 32a) enthalten, die eine zur Systemachse (30) senkrechte, den Bearbeitungsbereich enthaltende Ebene (34) in Schnittlinien (28b, 35) schneiden, welche quer zur Vorschubrichtung (x) verlaufen.

9. Einrichtung nach Anspruch 7, dadurch gekennzeichnet, dass die Röntgenstrahlungssensoranordnung einen Röntgenstrahlungssensor (27') enthält, dessen Messbereich mindestens ein Paar paralleler Grenzen (34a', 34b'; 34c', 34d') aufweist.

10. Einrichtung nach Anspruch 7, 8 oder 9, gekennzeichnet durch eine Vorrichtung (144, 144a, 148) zum Verändern des Querschnittes des Ladungsträgerstrahles während der Messperioden.

**Claims**

1. A method for controlling the position of a beam impingement spot, in which method a charge-carrier beam (14) of a charge-carrier beam machine tool impinges on a workpiece arrangement (10) and generates a machining area, with reference to a reference position (18'), the charge-carrier beam (14) emitted by a beam generating system along a system axis (30) being moved relative to the workpiece arrangement (10) in a feed direction (x) along a zone which is to be machined and being deflected during measuring periods, the duration of which is short in comparison with machining periods lying between these measuring periods, along a measuring path (22) which has the form of an essentially closed curve which intersects the zone to be machined in the feed direction (x) in front of the machining area (12), and X-ray radiation which is generated by interaction of the beam (14) with the workpiece arrangement (10) during the measuring periods being detected by an X-ray sensor (24, 26, 152, 27') and a measuring signal generated during this detection process being used for controlling the beam position, characterised in that the measuring signal is a function of the length of a section of the measuring path which is located between a measuring-path reference position (18') and a boundary (28a, 32a, 150, 34a' to 34d'), which intersects the measuring path, of the measuring area of the X-ray sensor.

2. A method according to Claim 1, characterised in that the measuring area boundary (34c', 150) runs parallel to the feed direction (x); that the associated measuring area is located on the side of the measuring area boundary which faces the machining zone (12', 12) and that the measuring signal is generated proportional to the length of a component (y), which runs transversely to the machining zone, of a path which the beam has to traverse on the measuring path from the measuring path reference position, located on the side of the measuring area boundary facing away from the machining zone, to the measuring area boundary.

3. A method according to Claim 1, characterised in that the measuring area boundary (22c, 34a') runs transversely to the feed direction (x), that the associated measuring area is located on the side of the measuring area boundary facing away from the machining area (12, 12'), and that the measuring signal is proportional to the component, which is parallel to the machining direction (x) of the section of the measuring path between the machining area and the measuring area boundary.

4. A method according to Claim 2 or 3, characterised in that an X-ray sensor having at least one pair of parallel measuring area boundaries (22b', 22d'; 34a', 34b'; 34c', 34d') is used and that the measuring signal is a function of the mean value of the paths between the measuring-path reference position and the two parallel measuring area boundaries.

5. A method according to Claim 3 or 4 for controlling the distance, calculated in the feed direction, of the beam-impingement spot from the place at which a filler material, wire reaches the workpiece surface, characterised in that two X-ray sensors (26, 24) are provided which have plane measuring area boundaries (32a, 28a) which face the system axis (30) and which form different angles to a plane 34 running at right angles to the system axis and intersect a plane, which contains the workpiece surface and is vertical to the system axis, in a line of intersection which runs transversely to the feed direction (x), and that a signal for controlling the above-mentioned distance is generated from the paths ($S_b$, $S_R$) between the beam reference position (36a) and the line of intersection.

6. A method according to Claim 5, in which the measuring path has two flank sides which meet in the machining area and a base side which extends over the machining zone, characterised in that the area boundary (32a) of the first X-ray sensor (26) runs transversely to the machining zone (12) and at the same distance from the system axis (30); that the measuring area boundary (28a) of the second X-ray sensor (24) forms an angle other than 0 or 90° with the system axis (30) and intersects the plane (34), which contains the workpiece surface, in a line of intersection (28b) which runs transversely to the feed direction (x) so that the measuring signals generated by the X-ray sensors are a function of the components, running in the direction of machining (x), of the paths travelled by the beam on one flank side of the measuring path between the machining area 12 and the recpective measuring area boundaries (32a, 28a); that the positions of the two measuring area boundaries (32a, 28a) have been selected in such a manner that their lines of intersection (35) coincide in the plane (34) containing the workpiece surface if the workpiece surface is in its correct position with respect to the system axis (30) and the filler material wire (38), and that an error signal, which corresponds to a distance error $\Delta x$, is used for compensating the distance error by implementing the equation

$$\Delta x = (S_b - S_o) + (S_b - S_R) \cdot tg\alpha \cdot tg\phi$$

where:
$S_o$ = nominal distance between beam impingement location and said line of intersection (35)
$\alpha$ = angle between said plane (34) and the measuring area boundary (28a) of the second X-ray sensor (24)
$\phi$ = angle between the axis of the straight filler wire (38) and the said plane (34)
$S_b$ = signal obtained by means of the first X-ray sensor (26), and
$S_R$ = signal obtained by means of the second X-ray sensor (24).

7. A device for a charge-carrier beam machine tool which contains a beam generating system having a system axis (30), a feed device for generating a relative movement between the system axis (30) and a workpiece arrangement (10), to be machined, along a feed direction (x) and a beam deflection device, for controlling the position of a beam impingement spot of the charge-carrier beam (14) on the surface of the workpiece arrangement (10) with reference to a reference position (18') during periods in which the workpiece arrangement (10) is being machined by the charge-carrier beam (14), having a deflection circuit which deflects the charge-carrier beam by means of the beam deflection device during short measuring periods, which are switched on between the machining periods, along a measuring path (22) which has the form of an essentially closed curve which intersects a zone, to be machined, in the feed direction in front of the area being machined at that moment, additionally having an X-ray sensor arrangement (24, 26, 152, 27') which has a measuring area (28, 32, 150, 34) which is directed onto the workpiece surface and which responds to an X-radiation which is generated by the charge-carrier beam in the beam-impingement spot, and having a beam position control device which is controlled by the output signal of the X-ray sensor arrangement, characterised in that the X-ray sensor arrangement (24, 26; 152; 27') has at least one sharply defined measuring area boundary (28, 32a, 150, 34a' to 34d') which runs at a distance from the system axis (30).

8. A device according to Claim 7, characterised in that the X-ray sensor arrangement contains two X-ray sensors (24, 26) each of which contains a measuring area boundary (28a, 32a) which faces the system axis (30) and which intersect a plane (34), which contains the machining area and which is vertical to the system axis (30), in lines of intersection (28b, 35) which run transversely to the feed direction (x).

9. A device according to Claim 7, characterised in that the X-ray sensor arrangement contains an X-ray sensor (27') the measuring area of which has at least one pair of parallel boundaries (34a', 34b'; 34c', 34d').

10. A device according to Claim 7, 8 or 9, characterised by a device (144, 144a, 148) for altering the crosssection of the charge-carrier beam during the measuring periods.

**Revendications**

1. Procédé pour régler la position d'un spot d'impact d'un faisceau, procédé dans lequel un faisceau porteur électrisé (14) d'une machine-outil à faisceau porteur électrisé vient au contact d'un ensemble de pièces d'œuvre (10) en engendrant une zone de traitement, par rapport à une position de référence (18'), le faisceau porteur électrisé (14) émis par un système de production de faisceau le long d'un axe (30) du système se déplaçant par rapport à l'ensemble de pièces d'œuvre (10) dans une direction de déplacement (x) le long d'une zone à traiter, tandis que pendant des périodes de mesure dont la durée est courte par comparaison avec les périodes de traitement se situant entre elles, ce faisceau est dévié le long d'un trajet de mesure (22) qui a la forme d'une courbe essentiellement fermée, croisant la zone à traiter dans la direction d'avance (x) avant la zone de traitement (12), tandis que le rayonnement Roentgen prenant naissance pendant les périodes de mesure par l'effet d'échange du faisceau (14) avec l'ensemble de pièces d'œuvre (10) est détecté par un détecteur de rayonnement Roentgen (24, 26, 152, 27') et un signal de mesure alors obtenu est utilisé pour régler la position du faisceau, procédé caractérisé en ce que le signal de mesure est une fonction de la longueur d'une portion du trajet de mesure, qui se situe entre une position de référence du trajet de mesure (18') et une frontière (28a, 32a, 150, 34a' à 34d'), croisant le trajet de mesure, de la zone de mesure du détecteur de rayonnement Roentgen.

2. Procédé selon la revendication 1, caractérisé en ce que la frontière (34c', 150) de la zone de mesure s'étend parallèlement à la direction d'avance (x), la zone de mesure associée se situant sur le côté de la frontière de la zone de mesure faisant face à la zone de traitement (12', 12), tandis que le signal de mesure est obtenu proportionnellement à la longueur d'une composante (y), orientée transversalement par rapport à la zone de traitement, d'une section qui implique le déplacement du faisceau sur le trajet de mesure depuis la position de référence de ce trajet de mesure se situant sur le côté de la frontière de la zone de mesure opposé à la zone de traitement, jusqu'à la frontière de la zone de mesure.

3. Procédé selon la revendication 1, caractérisé en ce que la frontière de la zone de mesure (22c, 34a') s'étend transversalement par rapport à la direction d'avance (x), la zone de mesure associée se trouvant sur le côté de la frontière de la zone de mesure opposée à la zone de traitement (12, 12'), tandis que le signal de mesure est proportionnel à la composante, parallèle à la direction de traitement (x), de la portion du trajet de mesure entre la zone de traitement et la frontière de la zone de mesure.

4. Procédé selon la revendication 2 ou 3, caractérisé en ce qu'on utilise un détecteur de rayonnement Roentgen avec au moins une paire de frontières de zones de mesure parallèles (22b', 22d'; 34a', 34b'; 34c', 34d'), le signal de mesure étant une fonction de la valeur moyenne de la section entre la position de référence du trajet de mesure et les deux frontières parallèles de la zone de mesure.

5. Procédé selon la revendication 3 ou 4, pour régler la distance, calculée selon la direction d'avance, du spot d'impact du faisceau de l'emplacement où un matériau d'appoint sous forme de fil atteint la surface de la pièce d'œuvre, procédé caractérisé en ce qu'il est prévu deux détcteurs de rayonnement Roentgen (26, 24), comportant des frontières planes de zones de mesure (32a, 28a) tournées vers l'axe (30) du système, ces frontières formant des angles différents avec un plan (34) s'étendant perpendiculairement à l'axe du système, et coupant, selon des droites d'intersection (35, 28b) s'étendant transversalement par rapport à la direction d'avance (x) un plan contenant la surface de la pièce d'œuvre, et perpendiculaire à l'axe du système, tandis qu'un signal pour le réglage de la distance précitée est obtenu à partir des sections (S_B, S_R) entre la position de référence (36a) du faisceau et les droites d'intersection.

6. Procédé selon la revendication 5, dans lequel le trajet de mesure comporte deux flancs latéraux se trouvant dans la zone de traitement et un côté de base s'étendant sur la zone de traitement, procédé caractérisé en ce que la frontière (32a) de la zone du premier détecteur de rayonnement Roentgen (26) s'étend transversalement par rapport à a zone de traitement (12) et à la même distance de l'axe du système (30), la frontiŏre (28a) de la zone de mesure du second détecteur de rayonnement Roentgen (24) formant avec l'axe (30) du système un angle présentant une différence entre 0 et 90°, et coupant le plan (34) contenant la surface de la pièce d'œuvre selon une droite d'intersection (28b) s'étendant transversalement par rapport à la direction d'avance (x), si bien que les signaux de mesure obtenus à partir des détecteurs de rayonnement Roentgen dépendent des composantes, s'étendant dans la direction de traitement (x), des sections que parcourt le faisceau sur un flanc latéral du trajet de mesure entre la zone de traitement (12) et les frontières respectives (32a, 28a) de la zone de mesure, les positions des deux frontières (32a, 28a), de la zone de mesure étant choisies de façon telle que leur droite d'intersection (35) pour la position théorique de la surface de la pièce d'œuvre par rapport à l'axe du système (30) et au fil de matériau d'appoint (38) coïncide dans le plan (34) contenant la surface de la pièce d'œuvre, cependant qu'on utilise pour compenser l'erreur de distance, un signal d'erreur correspondant à une erreur de distance $\Delta x$ par réalisation de l'égalité :

$$\Delta x = (S_b - S_o) + (S_b - S_R) \cdot tg\alpha \cdot tg\phi$$

où :

$S_o$ = distance théorique entre l'emplacement d'impact du faisceau et les droites d'intersection (35) précitées

$\alpha$ = angle entre le plan (34) précité et la frontière (28a) de la zone de mesure du second détecteur de rayonnement Roentgen (24)

$\phi$ = angle entre l'axe du fil rectiligne (38) de matériau d'appoint et le plan (34) précité

$S_b$ = signal obtenu au moyen du premier détecteur de rayonnement Roentgen (26)

$S_R$ = signal obtenu au moyen du second détecteur de rayonnement Roentgen (24)

7. Installation pour une machine-outil à faisceau porteur électrisé, installation comprenant un système de production de faisceau avec un axe (30) du système, un dispositif d'avance pour obtenir le long d'une direction d'avance (x) un déplacement relatif entre l'axe (30) du système et un ensemble de pièces d'œuvre (10) à traiter,

cette installation comprenant également un dispositif de déviation du faisceau, installation destinée au réglage de la position d'un spot d'impact du faisceau porteur électrisé (14) sur la surface de l'ensemble de pièces d'œuvre (10) par rapport à une position de référence (18') pendant des périodes au cours desquelles l'ensemble de pièces d'œuvre (10) est traité par le faisceau porteur électrisé (14), avec un circuit de déviation qui, par l'intermédiaire du dispositif de déviation du faisceau, dévie le faisceau porteur électrisé le long d'un trajet de mesure (22) durant de courtes périodes de mesure insérées entre les périodes de traitement, le trajet de mesure (22) revêtant la forme d'une courbe essentiellement fermée, qui croise une zone à traiter dans la direction d'avance avant la zone de traitement du moment, l'installation comportant, en outre, un ensemble de détecteurs de rayonnement Roentgen (24, 26, 152, 27') comportant une zone de mesure (28, 32, 150, 34) orientée sur la surface de la pièce d'œuvre et qui réagit à un rayonnement Roentgen obtenu à partir du faisceau porteur électrisé à son spot d'impact, installation comportant également un dispositif de réglage de la position du faisceau commandé par le signal de sortie de l'ensemble des détecteurs de rayonnement Roentgen, installation caractérisée en ce que l'ensemble de détecteurs de rayonnement Roentgen (24, 26; 1'52; 27') comporte au moins une frontière de zone de mesure (28a, 32a, 150, 34a' à 34d') strictement définie, qui s'étend à une certaine distance de l'axe (30) du système.

8. Installation selon la revendication 7, caractérisée en ce que l'ensemble de détecteurs de rayonnement Roentgen comprend deux détecteurs de rayonnement Roentgen (24, 26), comprenant respectivement une frontière de zone de mesure (28a, 32a) faisant face à l'axe (30) du système, et qui coupe un plan (34) perpendiculaire à l'axe (30) du système et contenant la zone de traitement, selon des lignes d'intersection (28b, 35) lesquelles s'étendent transversalement par rapport à la direction d'avance (x).

9. Installation selon la revendication 7, caractérisée en ce que l'ensemble de détecteurs de rayonnement Roentgen comprend un détecteur de rayonnement Roentgen (27') dont la zone de mesure comporte au moins une paire de frontières parallèles (34a', 34b'; 34c', 34d').

10. Installation selon la revendication 7, 8 ou 9, caractérisée en ce qu'elle comporte un dispositif (144, 144a, 148) pour modifier la section transversale du faisceau porteur électrisé pendant les périodes de mesure.

FIG.1

0 013 573

FIG. 2

FIG. 3

Meß-Triangel-Länge
in x-Richtung (6mm)

1 mm

SOLL-Auftreffstelle

IST-Auftreffstelle

FIG.4

0 013 573

FIG.5

27

FIG. 6

FIG. 7

FIG. 8

FIG. 9

FIG.10

0 013 573

FIG.11a

FIG.11b

FIG.12

# FIG. 13a

# FIG. 13b

# FIG. 13c

FIG. 14

FIG.15

132

130 STRAHL-ERZ. SYST.

134 U_h

138 FOKUS

159a,b,c

161 RECHNER

136

144a

148 STEUER-EINHEIT

110

144

142 ABL-STROMV

146

140

FIG.16

151

152b

144

110

152a

152b

FIG.17

36b'

12'

110a  110c

110b

159 157

D/A

159a

155

FIG.18

148a

FIG.19

34d'

110c'

Ampl. A

t_0

Zeit t